# EUROPEAN PATENT APPLICATION

(11) **EP 4 529 254 A1**
(43) Date of publication of application: **26.03.2025**
(21) Application number: 23823073.4
(22) Date of filing: 12.06.2023
(51) Int. Cl.: H04W 16/10, H04W 56/00, H04W 72/04

(54) **COMMUNICATION METHOD AND APPARATUS**

(30) Priority: 14.06.2022 CN 202210667481
(71) Applicant: Huawei Technologies Co., Ltd., Shenzhen, Guangdong 518129 (CN)
(72) Inventor: YUAN, Shitong, Shenzhen, Guangdong 518129 (CN); FAN, Bo, Shenzhen, Guangdong 518129 (CN); CHEN, Lei, Shenzhen, Guangdong 518129 (CN); LI, Fang, Shenzhen, Guangdong 518129 (CN)
(74) Representative: Gill Jennings & Every LLP
(86) International application number: PCT/CN2023/099654
(87) International publication number: WO 2023/241505

(57) **Abstract**

This application provides a communication method and apparatus. At least two uplink sending timing advances may be maintained between a network device and a terminal device, and the terminal device may determine an uplink sending timing advance to be used for an uplink sending resource, thereby improving performance of data transmission between the terminal device and the network device.

## Description

This application claims priority to Chinese Patent Application No. 202210667481.6, filed with the China National Intellectual Property Administration on June 14, 2022 and entitled "COMMUNICATION METHOD AND APPARATUS", which is incorporated herein by reference in its entirety.

### TECHNICAL FIELD

Embodiments of this application relate to the communication field, and more specifically, to a communication method and apparatus.

### BACKGROUND

Currently, only one uplink sending timing is maintained when a terminal device communicates with a network device. For example, when communicating with two network devices at the same time, the terminal device uses only one uplink sending timing advance (time advance, TA). Generally, there are a plurality of beam pair links (beam pair link, BPL) between the terminal device and the network devices. If channel states of signals on the links differ slightly, the terminal device may use a same uplink sending timing advance. However, if the channel states of the signals on the links differ greatly, how to determine an uplink sending timing advance becomes a technical problem that needs to be resolved.

### SUMMARY

Embodiments of this application provide a communication method, so that at least two uplink sending timing advances can be maintained between a network device and a terminal device, and the terminal device can determine an uplink sending timing advance to be used for an uplink sending resource, thereby improving performance of data transmission between the terminal device and the network device.

According to a first aspect, a communication method is provided, and may be performed by a terminal device, or may be performed by a component (for example, a chip or a circuit) of the terminal device. This is not limited herein.

The method includes: The terminal device determines a first uplink sending resource associated with a first uplink sending timing advance in at least two uplink sending timing advances, where the at least two uplink sending timing advances include the first uplink sending timing advance. The terminal device sends data on the first uplink sending resource based on the first uplink sending timing advance.

In this application, that "the terminal device sends data on the first uplink sending resource based on the first uplink sending timing advance" may also be understood as that the terminal device performs communication on the first uplink sending resource based on the first uplink sending timing advance.

It should be noted that "B associated with A" in this application may be understood as that "there is an association relationship between A and B", "there is a correspondence between A and B", or "there is a mapping relationship between A and B". In this application, "B associated with A" indicates that A may be determined based on B. However, it should be further understood that determining A based on B does not mean that A is determined only based on B, and A may be further determined based on B and/or other information.

Alternatively, "correspondence" or "association relationship" in this specification may also be expressed as "mapping relationship".

It should be understood that "correspondence" in embodiments of this application may be stored or recorded by using a function relationship, a table, a mapping relationship, or the like. In the following embodiments, "correspondence" may be configured by a network device, or may be predefined in a protocol, or the like. This is not limited.

In a possible implementation, the method further includes: The terminal device determines the first uplink sending timing advance in the at least two uplink sending timing advances.

In a possible implementation, that the terminal device determines a first uplink sending resource associated with a first uplink sending timing advance in at least two uplink sending timing advances includes: The terminal device receives a first control resource set, where the first control resource set is used to schedule an uplink sending resource, and the first control resource set is associated with the first uplink sending timing advance, or a resource pool to which the first control resource set belongs is associated with the first uplink sending timing advance. The terminal device determines that the uplink sending resource scheduled by using the first control resource set is the first uplink sending resource.

Based on the foregoing technical solution, in this application, an identifier of a resource pool to which a control resource set for scheduling an uplink sending resource belongs and an identifier of the control resource set for scheduling the uplink sending resource may be configured to be associated with the first uplink sending timing, so that the terminal device can determine that the uplink sending resource is the first uplink sending resource, and can send data on the first uplink sending resource by using the first uplink sending timing advance.

In a possible implementation, that the terminal device determines a first uplink sending resource associated with a first uplink sending timing advance in at least two uplink sending timing advances includes: The terminal device receives second information from the network device, where the second information indicates that a resource pool to which a first control resource set belongs or the first control resource set is associated with the first uplink sending timing advance. The terminal device receives the first control resource set, where the first control resource set is used to schedule an uplink sending resource, and the first control resource set is associated with both the first uplink sending timing advance and a second uplink sending timing advance in the at least two uplink sending timing advances, or the resource pool to which the first control resource set belongs is associated with both the first uplink sending timing advance and the second uplink sending timing advance in the at least two uplink sending timing advances. The terminal device determines, based on the first control resource set and the second information, that the uplink sending resource scheduled by using the first control resource set is the first uplink sending resource.

Based on the foregoing technical solution, in this application, an identifier of a resource pool of a control resource set for scheduling an uplink sending resource and an identifier of the control resource set for scheduling the uplink sending resource may be configured to be associated with both the first uplink sending timing advance and the second uplink sending timing advance. In this case, an uplink sending timing advance to be used for the uplink sending resource may be dynamically indicated by using signaling, so that the terminal device can determine the first uplink sending resource, thereby ensuring data transmission performance.

In a possible implementation, that the terminal device determines a first uplink sending resource associated with a first uplink sending timing advance in at least two uplink sending timing advances includes: The terminal device determines a first reference signal of an uplink sending resource, where the first reference signal belongs to a first reference signal set, and the first reference signal set is associated with the first uplink sending timing advance, or the first reference signal is associated with the first uplink sending timing advance; and the terminal device determines, based on the first reference signal, that the uplink resource is the first uplink sending resource. Alternatively, the terminal device determines a first transmission configuration indicator state of an uplink sending resource, where the first transmission configuration indicator state belongs to a first transmission configuration indicator state set, and the first transmission configuration indicator state set is associated with the first uplink sending timing advance, or a first transmission configuration indicator state of the first uplink sending resource is associated with the first uplink sending timing advance; and the terminal device determines, based on the first transmission configuration indicator state, that the uplink sending resource is the first uplink sending resource.

Based on the foregoing technical solution, in this application, a reference signal and a transmission configuration indicator state may be configured to be associated with an uplink sending timing advance, so that the terminal device can determine that the first uplink sending timing advance is used for the uplink sending resource.

In a possible implementation, that the terminal device determines a first uplink sending resource associated with a first uplink sending timing advance in at least two uplink sending timing advances includes: The terminal device receives third information from the network device, where the third information indicates that a first reference signal of an uplink sending resource or a first transmission configuration indicator state of the uplink sending resource is associated with the first uplink sending timing advance. The terminal device determines the first reference signal of the uplink sending resource, where the first reference signal belongs to a first reference signal set, and the first reference signal set is associated with both the first uplink sending timing advance and a second uplink sending timing advance in the at least two uplink sending timing advances, or the first reference signal is associated with both the first uplink sending timing advance and the second uplink sending timing advance in the at least two uplink sending timing advances; and the terminal device determines, based on the first reference signal of the uplink sending resource and the third information, that the uplink sending resource is the first uplink sending resource. Alternatively, the terminal device determines the first transmission configuration indicator state of the uplink sending resource, where the first transmission configuration indicator state belongs to a first transmission configuration indicator state set, and the first transmission configuration indicator state set is associated with both the first uplink sending timing advance and a second uplink sending timing advance in the at least two uplink sending timing advances, or the first transmission configuration indicator state is associated with both the first uplink sending timing advance and the second uplink sending timing advance in the at least two uplink sending timing advances; and the terminal device determines, based on the first transmission configuration indicator state of the uplink sending resource and the third information, that the uplink sending resource is the first uplink sending resource.

Based on the foregoing technical solution, in this application, a reference signal and a transmission configuration indicator state may be configured to be associated with both the first uplink sending timing advance and the second uplink sending timing advance. In this case, an uplink sending timing advance to be used for the uplink sending resource may be dynamically indicated by using signaling, thereby ensuring data transmission performance.

In a possible implementation, that the terminal device determines a first uplink sending resource associated with a first uplink sending timing advance in at least two uplink sending timing advances includes: The terminal device receives first information from the network device, where the first information includes at least two transmission configuration indicator state fields, and a first transmission configuration indicator state field in the at least two transmission configuration indicator state fields indicates a transmission configuration indicator state of an uplink sending resource. The terminal device determines, based on the first transmission configuration indicator state field, that the uplink sending resource is the first uplink sending resource.

Based on the foregoing technical solution, in this application, two transmission configuration indicator state fields may be implicitly associated with the first uplink sending timing advance, so that the terminal device can determine the first uplink sending resource, and the first uplink sending timing advance may be used for data on the first uplink sending resource.

In a possible implementation, that the terminal device determines a first uplink sending resource associated with a first uplink sending timing advance in at least two uplink sending timing advances includes: The terminal device receives first signaling from the network device, where the first signaling is used to schedule an uplink sending resource, the first signaling includes a first field, and the first field indicates that the first uplink sending timing advance is used for the uplink sending resource. The terminal device based on the first field, that the uplink sending resource scheduled by using the first signaling is the first uplink resource.

Based on the foregoing technical solution, in this application, signaling may dynamically indicate that the first uplink sending resource is associated with the first uplink sending timing advance, so that the terminal device can determine that the uplink sending resource is the first uplink sending resource, and the first uplink sending timing advance may be used for the uplink sending resource.

In this application, the terminal device may determine, in a plurality of implementations, whether the first uplink sending timing advance or the second uplink sending timing advance is used for the uplink sending resource, so that implementation of the terminal device is more flexible.

In a possible implementation, that the terminal device determines the first uplink sending timing advance in the at least two uplink sending timing advances includes: The terminal device receives a first random access response from the network device, where the first random access response includes information indicating an uplink sending timing advance. The terminal device receives first control information, where the first control information is used to schedule the first random access response, and the first control information indicates that the information that is included in the first random access response and that indicates the uplink sending timing advance is information indicating the first uplink sending timing advance; and the terminal device determines the first uplink sending timing advance in the at least two uplink sending timing advances based on the first control information. Alternatively, the terminal device receives second control information, where the second control information is used to schedule a first physical random access channel, the first physical random access channel is used to request the first random access response, and the second information indicates that the information that is included in the first random access response and that indicates the uplink sending timing advance is information indicating the first uplink sending timing advance; and the terminal device determines the first uplink sending timing advance in the at least two uplink sending timing advances based on the second control information.

Based on the foregoing technical solution, in this application, a random access response may include information indicating an uplink sending timing advance, and the terminal device may flexibly determine, in various manners, whether the information about the uplink sending timing advance is the information indicating the first uplink sending timing advance or information indicating the second uplink sending timing advance.

In a possible implementation, the method further includes: The terminal device receives an absolute timing advance command from the network device, where the absolute timing advance command includes information indicating an uplink sending timing advance. One field in the absolute timing advance command indicates that the information that is included in the absolute timing advance command and that indicates the uplink sending timing advance is information indicating the first uplink sending timing advance; or one field in the absolute timing advance command indicates a timing advance group identifier, and the timing advance group identifier is associated with the first uplink sending timing advance; or one field in the absolute timing advance command indicates a timing advance group identifier, and another field in the absolute timing advance command indicates that the information that is included in the absolute timing advance command and that indicates the uplink sending timing advance is information indicating the first uplink sending timing advance. That the terminal device determines the first uplink sending timing advance in the at least two uplink sending timing advances includes: The terminal device determines the first uplink sending timing advance in the at least two uplink sending timing advances based on the timing advance command.

Based on the foregoing technical solution, in this application, the absolute timing advance command includes the information indicating the uplink sending timing advance, and the terminal may flexibly determine, in various manners, whether the information about the uplink sending timing advance is the information indicating the first uplink sending timing advance or information indicating the second uplink sending timing advance.

In a possible implementation, the at least two uplink sending timing advances include a second uplink sending timing advance; and the method further includes: The terminal device receives an absolute timing advance command, where the absolute timing advance command includes information indicating an uplink sending timing advance, and one field in the absolute timing advance command indicates a timing advance group identifier. The terminal device determines, based on the timing advance group identifier, that the information about the uplink sending timing advance in the absolute timing advance command indicates the first uplink sending timing advance in the at least two uplink sending timing advances; or the terminal device determines, based on the timing advance group identifier, that the information about the uplink sending timing advance in the absolute timing advance command indicates the second uplink sending timing advance in the at least two uplink sending timing advances.

Based on the foregoing technical solution, in this application, the absolute timing advance command includes the information indicating the uplink sending timing advance, and the terminal may flexibly determine, in various manners, whether the information about the uplink sending timing advance is the information indicating the first uplink sending timing advance or information indicating the second uplink sending timing advance.

In a possible implementation, the method further includes: The terminal device receives second signaling from the network device, where the second signaling indicates information about the first uplink sending timing advance, the second signaling includes a second field, the second field indicates information about a first offset, and the information about the first offset is information about an offset between the second uplink sending timing advance and the first uplink sending timing advance. That the terminal device determines the first uplink sending timing advance in the at least two uplink sending timing advances includes: The terminal device determines the first uplink sending timing advance in the at least two uplink sending timing advances based on the second signaling.

In a possible implementation, the method further includes: The terminal device receives third signaling from the network device, where the third signaling indicates update information of the first uplink sending timing advance, and the third signaling includes the second field; and the second field indicates the information about the first offset, and the information about the first offset is the information about the offset between the second uplink sending timing advance and the first uplink sending timing advance; or the second field indicates information about a first adjustment amount, and the information about the first adjustment amount is used to update an adjustment amount of the first uplink sending timing advance. That the terminal device determines the first uplink sending timing advance in the at least two uplink sending timing advances includes: The terminal device determines an updated first uplink sending timing advance based on the third signaling.

It should be noted that the indicated information about the first offset may be the same or may be different in this application. For example, the information about the first offset that is indicated in the second signaling may be the same as or different from the information about the first offset that is indicated in the third signaling. This is not limited.

Based on the foregoing technical solution, in this application, the third signaling includes the information about the offset between the second uplink sending timing advance and the first uplink sending timing advance or includes the adjustment amount for updating the first uplink sending timing advance, and the terminal may flexibly determine or adjust the first uplink sending timing based on the information about the offset between the second uplink sending timing advance and the first uplink sending timing advance, or continuously adjust the first uplink sending timing based on the adjustment amount of the first uplink sending timing advance, thereby ensuring that uplink sending timing is more accurate.

In a possible implementation, the third signaling further includes a third field, the third field indicates information about a second adjustment amount, and the information about the second adjustment amount is used to update an adjustment amount of the second uplink sending timing advance.

In a possible implementation, the third signaling further includes a fourth field, and the fourth field indicates whether the third signaling includes the third field, or the fourth field indicates a timing advance group identifier associated with the second uplink sending timing advance.

In a possible implementation, the second signaling and/or the third signaling further include/includes a fifth field; and the fifth field indicates an identifier of a virtual cell, where a physical cell associated with the virtual cell is a non-serving cell; or the fifth field indicates a timing advance group identifier associated with the first uplink sending timing advance.

In a possible implementation, the method further includes: The terminal device receives the information about the second adjustment amount from the network device at a first moment, where the information about the second adjustment amount indicates the adjustment amount for updating the second uplink sending timing advance. The terminal device determines an updated second uplink sending timing advance *N*_{TA2_new} based on the information about the second adjustment amount. The terminal device receives the information about the first offset from the network device at a second moment, where the second moment is after a moment at which the second adjustment amount takes effect. The terminal device determines, based on the updated second uplink sending timing advance and the information about the first offset, that the first uplink sending timing advance is: *N*_{TA1} = *N*_{TA2_new} + *offset ·* 16 · 64/2*^{µ}*, where *N*_{TA2_new} is the second uplink sending timing advance that is updated after the second adjustment amount takes effect, *offset ·* 16 · 64/2*^{µ}* represents the first offset, and *µ* represents a subcarrier spacing.

Based on the foregoing technical solution, in this application, assuming that the network device may update the adjustment amount of the second uplink sending timing advance by using the information about the second adjustment amount, if the information about the second adjustment amount takes effect, the terminal device may determine the first uplink sending timing advance based on the newly determined second uplink sending timing and the information about the first offset.

In a possible implementation, the method further includes: The terminal device receives the information about the second adjustment amount from the network device at a first moment, where the information about the second adjustment amount indicates the adjustment amount for updating the second uplink sending timing advance. The terminal device receives the information about the first offset from the network device at a third moment, where the third moment is before a moment at which the second adjustment amount takes effect. The terminal device determines, based on the second uplink sending timing advance and the information about the first offset, that the first uplink sending timing advance is: *N*_{TA1} = *N*_{TA2_old} *+ offset* · 16 · 64/2*^{µ}*, where *N*_{TA2_old} is the second uplink sending timing advance that is not updated before the second adjustment amount takes effect, *offset* · 16 · 64/2*^{µ}* represents the first offset, and *µ* represents a subcarrier spacing.

In a possible implementation, if the terminal device fails to receive the information about the second adjustment amount (which may also be understood as that the terminal device does not successfully receive the information about the second adjustment amount), but successfully receives the information about the first offset, the terminal device determines, based on the second uplink sending timing advance and the information about the first offset, that the first uplink sending timing advance is: *N*_{TA1} = *N*_{TA2_old} *+ offset* · 16 · 64/2*^{µ}*.

Based on the foregoing technical solution, in this application, assuming that the network device may update the adjustment amount of the second uplink sending timing advance by using the information about the second adjustment amount, if the information about the second adjustment amount has not taken effect (or the terminal device does not successfully receive the information about the second adjustment amount), the terminal device may determine the first uplink sending timing advance based on the previously determined second uplink sending timing and the information about the first offset.

In a possible implementation, the terminal device receives N parameter sets configured by the network device, where an i^{th} parameter set in the N parameter sets includes a first parameter and/or a second parameter, the first parameter indicates a timing advance command compensation coefficient, the second parameter indicates the offset between the first uplink sending timing advance and the second uplink sending timing advance in the at least two uplink sending timing advances, the i^{th} parameter set is any set in the N parameter sets, and N is an integer greater than or equal to 1. The terminal device receives a correspondence that is between M identifiers and the N parameter sets and that is configured by the network device, where the identifier includes at least one of the following: a transmission configuration indicator state index, a reference signal index, a transmission configuration indicator state set index, a reference signal set index, a control resource set identifier, and a resource pool set identifier of a control resource set, each of the M identifiers is associated with the first uplink sending resource, and M is an integer greater than or equal to 1. That the terminal device determines the first uplink sending timing advance in the at least two uplink sending timing advances includes: The terminal device determines the first uplink sending timing advance based on the second uplink sending timing advance in the at least two uplink sending timing advances and a parameter set associated with the first uplink sending resource.

Based on the foregoing technical solution, in this application, the N parameter sets may be configured, and the terminal device may determine the first uplink sending timing advance based on the parameter set.

In a possible implementation, the method further includes: The terminal device receives at least one first parameter set configured by the network device, where each of the at least one first parameter set includes K first parameters, the first parameter indicates a timing advance command compensation coefficient, and K is an integer greater than or equal to 1; and/or the terminal device receives at least one second parameter set configured by the network device, where each of the at least one second parameter set includes L second parameters, the second parameter indicates the offset between the first uplink sending timing advance and the second uplink sending timing advance in the at least two uplink sending timing advances, and L is an integer greater than or equal to 1. The terminal device receives a correspondence that is between M identifiers and the K first parameters in the first parameter set and/or the L second parameters in the second parameter set and that is configured by the network device, where the identifier includes at least one of the following: a transmission configuration indicator state index, a reference signal index, a transmission configuration indicator state set index, a reference signal set index, a control resource set identifier, and a resource pool set identifier of a control resource set, each of the M identifiers is associated with the first uplink sending resource, and M is an integer greater than or equal to 1. That the terminal device determines the first uplink sending timing advance in the at least two uplink sending timing advances includes: The terminal device determines the first uplink sending timing advance based on the second uplink sending timing advance and the first parameter and/or the second parameter associated with the first uplink sending resource.

Based on the foregoing technical solution, in this application, the first parameter set and/or the second parameter set may be configured, and the terminal device may determine the first uplink sending timing advance based on the first parameter in the first parameter set and/or the second parameter in the second parameter set.

According to a second aspect, a communication method is provided, and may be performed by a network device (for example, a base station), or may be performed by a component (for example, a chip or a circuit) of the network device. This is not limited herein.

For beneficial effects corresponding to network-side technical solutions and beneficial effects corresponding to apparatuses, refer to the descriptions of the terminal-side beneficial effects. Details are not described herein again.

The method includes: The network device sends first signaling to a terminal device, where the first signaling is used to configure an association relationship between a first uplink sending timing advance *N*_{TA1} in at least two uplink sending timing advances and a first uplink sending resource. The network device sends second signaling to the terminal device, where the second signaling indicates the first uplink sending timing advance, and data on the first uplink sending resource is sent by using the first uplink sending timing advance.

In a possible implementation, the first signaling indicates to configure an association relationship between a first control resource set for the first uplink sending resource and the first uplink sending timing advance, or the first signaling is used to configure an association relationship between a resource pool to which the first control resource set for scheduling the first uplink sending resource belongs and the first uplink sending timing advance.

In a possible implementation, that the network device sends first signaling to a terminal device, where the first signaling is used to configure a first uplink sending resource associated with a first uplink sending timing advance *N*_{TA1} in at least two uplink sending timing advances includes: The network device sends the first signaling to the terminal device, where the first signaling is used to configure an association relationship between a resource pool to which a control resource set for scheduling the first uplink sending resource belongs or the control resource set, the first uplink sending timing advance, and a second uplink sending timing advance in the at least two uplink sending timing advances. The method further includes: The network device sends second information to the terminal device, where the second information indicates that the first uplink sending resource is associated with the first uplink sending timing advance.

In a possible implementation, the first signaling is used to configure an association relationship between a first reference signal set and the first uplink sending timing advance, or the first signaling is used to configure an association relationship between a first reference signal of the first uplink sending resource and the first uplink sending timing advance; or the first signaling is used to configure an association relationship between a first transmission configuration indicator state set and the first uplink sending timing advance, or the first signaling is used to configure an association relationship between a first transmission configuration indicator state of the first uplink sending resource and the first uplink sending timing advance.

In a possible implementation, that the network device sends first signaling to a terminal device, where the first signaling indicates to configure a first uplink sending resource associated with a first uplink sending timing advance *N*_{TA1} in at least two uplink sending timing advances includes: The network device sends the first signaling to the terminal device, where the first signaling indicates to configure an association relationship between a first reference signal of the first uplink sending resource, or a first reference signal set to which the first reference signal of the first uplink sending resource belongs, or a first transmission configuration indicator state of the first uplink sending resource, or a first transmission configuration indicator state set to which the first transmission configuration indicator state of the first uplink sending resource belongs, the first uplink sending timing advance, and a second uplink sending timing advance in the at least two uplink sending timing advances. The method further includes: The network device sends third information to the terminal device, where the third information indicates that the first reference signal of the first uplink sending resource or the first transmission configuration indicator state of the first uplink sending resource is associated with the first uplink sending timing advance.

In a possible implementation, the first signaling is used to configure an association relationship between a first transmission configuration indicator state indication field and the first uplink sending timing; and the method further includes: The network device sends first information to the terminal device, where the first information includes at least two transmission configuration indicator state fields, and a first transmission configuration indicator state field in the at least two transmission configuration indicator state fields indicates a transmission configuration indicator state of an uplink sending resource.

In a possible implementation, the first signaling is used to schedule an uplink sending resource, the first signaling includes a first field, and the first field indicates that the first uplink sending timing advance is used for the uplink sending resource.

In a possible implementation, the second signaling is a first random access response, and the first random access response includes information indicating an uplink sending timing advance; and the method further includes: The network device sends first control information to the terminal device, where the first control information is used to schedule the second signaling, and the first control information indicates that the information that is included in the second signaling and that indicates the uplink sending timing advance is information indicating the first uplink sending timing advance; or the network device sends second control information to the terminal device, where the second control information is used to schedule a first physical random access channel, the first physical random access channel is request information of the second signaling, and the second control information indicates that the information that is included in the second signaling and that indicates the uplink sending timing advance is information indicating the first uplink sending timing advance.

In a possible implementation, the second signaling is an absolute timing advance command, and the second signaling includes the information indicating the uplink sending timing advance. That the network device sends second signaling to the terminal device, where the second signaling indicates the first uplink sending timing advance includes: One field in the second signaling indicates that the information that is included in the second signaling and that indicates the uplink sending timing advance is the information indicating the first uplink sending timing advance; or one field in the second signaling indicates a timing advance group identifier, and the timing advance group identifier is associated with the first uplink sending timing advance; or one field in the second signaling indicates a timing advance group identifier, and another field in the second signaling indicates that the information that is included in the second signaling and that indicates the uplink sending timing advance is the information indicating the first uplink sending timing advance.

In a possible implementation, the at least two uplink sending timing advances include a second uplink sending timing advance; and the method further includes: The network device sends an absolute timing advance command to the terminal device, where the absolute timing advance command includes the information indicating the uplink sending timing advance, and one field in the absolute timing advance command indicates a timing advance group identifier. The timing advance group identifier is used by the terminal device to determine that the information about the uplink sending timing advance in the absolute timing advance command indicates the first uplink sending timing advance in the at least two uplink sending timing advances; or the timing advance group identifier is used by the terminal device to determine that the information about the uplink sending timing advance in the absolute timing advance command indicates the second uplink sending timing advance in the at least two uplink sending timing advances.

In a possible implementation, the second signaling includes a second field, the second field indicates information about a first offset, and the information about the first offset is information about an offset between the second uplink sending timing advance and the first uplink sending timing advance.

In a possible implementation, the method further includes: The network device sends third signaling to the terminal device, where the third signaling indicates update information of the first uplink sending timing advance, and the third signaling includes the second field; and the second field indicates the information about the first offset, and the information about the first offset is the information about the offset between the second uplink sending timing advance and the first uplink sending timing advance; or the second field indicates information about a first adjustment amount, and the information about the first adjustment amount is used to update an adjustment amount of the first uplink sending timing advance, where the first uplink sending resource is sent by using an updated first uplink sending timing advance.

In a possible implementation, the third signaling further includes a third field, the third field indicates information about a second adjustment amount, and the information about the second adjustment amount is used to update an adjustment amount of the second uplink sending timing advance.

In a possible implementation, the third signaling further includes a fourth field, and the fourth field indicates whether the third signaling includes the third field, or the fourth field indicates a timing advance group identifier associated with the second uplink sending timing advance.

In a possible implementation, the second signaling and/or the third signaling further include/includes a fifth field; and the fifth field indicates an identifier of a virtual cell, where a physical cell associated with the virtual cell is a non-serving cell; or the fifth field indicates a timing advance group identifier associated with the first uplink sending timing advance.

In a possible implementation, the method further includes: The network device sends the information about the second adjustment amount to the terminal device at a first moment, where the information about the second adjustment amount indicates the adjustment amount for updating the second uplink sending timing advance, and the information about the second adjustment amount is used by the terminal device to determine an updated second uplink sending timing advance *N*_{TA2_new}. The network device sends the information about the first offset to the terminal device at a second moment, where the second moment is after a moment at which the second adjustment amount takes effect. The second uplink sending timing advance and the information about the first offset are used by the terminal device to determine that the first uplink sending timing advance is: *N*_{TA1} = *N*_{TA2_new} *+ offset ·* 16 · 64/2*^{µ}*, where *N*_{TA2_new} is the second uplink sending timing advance that is updated after the second adjustment amount takes effect, *offset* · 16 · 64/2*^{µ}* represents the first offset, and *µ* represents a subcarrier spacing.

In a possible implementation, the method further includes: The network device sends the information about the second adjustment amount to the terminal device at a first moment, where the information about the second adjustment amount indicates the adjustment amount for updating the second uplink sending timing advance. The network device sends the information about the first offset to the terminal device at a third moment, where the third moment is before a moment at which the second adjustment amount takes effect. The second uplink sending timing advance and the information about the first offset are used by the terminal device to determine that the first uplink sending timing advance is: *N*_{TA1} = *N*_{TA2_old} *+ offset* · 16 · 64/2*^{µ}*, where *N*_{TA2_old} is the second uplink sending timing advance that is not updated before the second adjustment amount takes effect, *offset ·* 16 · 64/2*^{µ}* represents the first offset, and *µ* represents a subcarrier spacing.

In a possible implementation, the method further includes: The network device sends N parameter sets to the terminal device, where an i^{th} parameter set in the N parameter sets includes a first parameter and/or a second parameter, the first parameter indicates a timing advance command compensation coefficient, the second parameter indicates the offset between the first uplink sending timing advance and the second uplink sending in the at least two uplink sending timing advances, the i^{th} parameter set is any set in the N parameter sets, and N is an integer greater than or equal to 1. The network device sends a correspondence between M identifiers and the N parameter sets to the terminal device, where the identifier includes at least one of the following: a transmission configuration indicator state index, a reference signal index, a transmission configuration indicator state set index, a reference signal set index, a control resource set identifier, and a resource pool set identifier of a control resource set, each of the M identifiers is associated with the first uplink sending resource, and M is an integer greater than or equal to 1. The second uplink sending timing advance and a parameter set associated with the first uplink sending resource are used to determine the first uplink sending timing advance.

In a possible implementation, the method further includes: The network device sends at least one first parameter set to the terminal device, where each of the at least one first parameter set includes K first parameters, the first parameter indicates a timing advance command compensation coefficient, and K is an integer greater than or equal to 1; and/or the network device sends at least one second parameter set to the terminal device, where the second parameter set includes L second parameters, each of the at least one second parameter set indicates the offset between the first uplink sending timing advance and the second uplink sending timing advance in the at least two uplink sending timing advances, and L is an integer greater than or equal to 1. The terminal device receives a correspondence that is between M identifiers and the K first parameters in the first parameter set and/or the L second parameters in the second parameter set and that is configured by the network device, where the identifier includes at least one of the following: a transmission configuration indicator state index, a reference signal index, a transmission configuration indicator state set index, a reference signal set index, a control resource set identifier, and a resource pool set identifier of a control resource set, each of the M identifiers is associated with the first uplink sending resource, and M is an integer greater than or equal to 1. That the terminal device determines the first uplink sending timing advance in the at least two uplink sending timing advances includes: The terminal device determines the first uplink sending timing advance based on the second uplink sending timing advance and the first parameter and/or the second parameter associated with the first uplink sending resource.

According to a third aspect, a communication apparatus is provided. The apparatus is configured to perform the method according to any one of the possible implementations of the first aspect. Specifically, the apparatus may include units and/or modules, for example, a transceiver unit and/or a processing unit, configured to perform the method according to any one of the possible implementations of the first aspect.

In an implementation, the apparatus is a terminal device. When the apparatus is a communication device, a communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a terminal device. When the apparatus is a chip, a chip system, or a circuit used in a communication device, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a fourth aspect, a communication apparatus is provided. The apparatus is configured to perform the method according to any one of the possible implementations of the second aspect. Specifically, the apparatus may include units and/or modules, for example, a transceiver unit and/or a processing unit, configured to perform the method according to any one of the possible implementations of the second aspect.

In an implementation, the apparatus is a terminal device. When the apparatus is a communication device, a communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a terminal device. When the apparatus is a chip, a chip system, or a circuit used in a communication device, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a fifth aspect, a communication apparatus is provided. The apparatus includes at least one processor, configured to execute a computer program or instructions stored in a memory, to perform the method according to any one of the possible implementations of the first aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a terminal device.

In another implementation, the apparatus is a chip, a chip system, or a circuit used in a terminal device.

According to a sixth aspect, a communication apparatus is provided. The apparatus includes at least one processor, configured to execute a computer program or instructions stored in a memory, to perform the method according to any one of the possible implementations of the second aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a network device.

In another implementation, the apparatus is a chip, a chip system, or a circuit used in a network device.

According to a seventh aspect, this application provides a processor, including an input circuit, an output circuit, and a processing circuit. The processing circuit is configured to: receive a signal through the input circuit, and transmit a signal through the output circuit, so that the processor performs the method according to any one of the possible implementations of any one of the first aspect and the second aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal that is received by the input circuit may be received and input by, for example, but not limited to, a transceiver, and a signal that is output by the output circuit may be output to, for example, but not limited to, a transmitter and transmitted by the transmitter. In addition, the input circuit and the output circuit may be a same circuit, and the circuit is used as the input circuit and the output circuit at different moments. Specific implementations of the processor and the various circuits are not limited in this embodiment of this application.

Operations such as sending and obtaining/receiving related to the processor may be understood as operations such as outputting, receiving, and inputting of the processor or sending and receiving operations performed by a radio frequency circuit and an antenna, unless otherwise specified, or provided that the operations do not contradict actual functions or internal logic of the operations in related descriptions. This is not limited in this application.

According to an eighth aspect, a processing device is provided, including a processor and a memory. The processor is configured to: read instructions stored in the memory, receive a signal through a transceiver, and transmit a signal through a transmitter, to perform the method according to any one of the possible implementations of any one of the first aspect and the second aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read only memory, ROM). The memory and the processor may be integrated on a same chip, or may be disposed on different chips. A type of the memory and a manner in which the memory and the processor are disposed are not limited in this embodiment of this application.

It should be understood that a related data exchange process such as sending of indication information may be a process of outputting the indication information from the processor, and receiving of capability information may be a process of receiving the input capability information by the processor. Specifically, data that is output by the processor may be output to the transmitter, and input data that is received by the processor may be from the transceiver. The transmitter and the transceiver may be collectively referred to as a transceiver.

The processing device in the eighth aspect may be one or more chips. The processor in the processing device may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a ninth aspect, a computer-readable storage medium is provided. The computer-readable medium stores program code for device execution, and the program code includes the method according to any one of the possible implementations of the first aspect to the fourth aspect.

According to a tenth aspect, a computer program product including instructions is provided. When the computer program product runs on a computer, the computer is enabled to perform the method according to any one of the possible implementations of the first aspect and the second aspect.

According to an eleventh aspect, a chip system is provided, including a processor configured to invoke a computer program from a memory and run the computer program, so that a device in which the chip system is installed performs the method according to the implementations of any one of the first aspect and the second aspect.

According to a twelfth aspect, a communication system is provided. The communication system includes a terminal device and/or a network device. The terminal device is configured to perform the method according to any one of the possible implementations of the first aspect, and the network device is configured to perform the method according to any one of the possible implementations of the second aspect.

### BRIEF DESCRIPTION OF DRAWINGS

FIG. 1 is a diagram of a scenario to which this application is applicable;
FIG. 2 is a diagram of another scenario to which this application is applicable;
FIG. 3 is a schematic flowchart of a communication method 300 according to this application;
FIG. 4 is a diagram of sending an adjustment amount of a first uplink sending timing advance and sending information about a first offset according to this application;
FIG. 5 is a diagram of a format of an absolute advance command according to this application;
FIG. 6(a) to FIG. 6(h) are a diagram of a format of a timing advance command according to this application;
FIG. 7 is a block diagram of an apparatus 100 for determining an uplink sending timing advance according to this application; and
FIG. 8 is a block diagram of an apparatus 200 for determining an uplink sending timing advance according to this application.

### DESCRIPTION OF EMBODIMENTS

The following describes technical solutions in embodiments of this application with reference to accompanying drawings.

Wireless communication systems to which embodiments of this application can be applied include but are not limited to a global system for mobile communications (global system of mobile communication, GSM), a long term evolution (long term evolution, LTE) frequency division duplex (frequency division duplex, FDD) system, LTE time division duplex (time division duplex, TDD), an LTE system, a long term evolution advanced (LTE-Advanced, LTE-A) system, a next-generation communication system (for example, a 5G communication system), a system integrating a plurality of access systems, or an evolved system (for example, a 6G communication system).

The technical solutions provided in this application may be further applied to machine type communication (machine type communication, MTC), a long term evolution-machine (long Term Evolution-machine, LTE-M) technology, a device-to-device (device to device, D2D) network, a machine-to-machine (machine to machine, M2M) network, an internet of things (internet of things, IoT) network, or another network. The IoT network may include, for example, an internet of vehicles. Communication modes in an internet of vehicles system are collectively referred to as vehicle to X (vehicle to X, V2X, where X may represent anything). For example, V2X may include vehicle-to-vehicle (vehicle to vehicle, V2V) communication, vehicle-to-infrastructure (vehicle to infrastructure, V2I) communication, vehicle-to-pedestrian (vehicle to pedestrian, V2P) communication, or vehicle-to-network (vehicle to network, V2N) communication.

A network device mentioned in this application may be, for example, a radio access network device, or may be, for another example, a device having a wireless transceiver function. The radio access network device may be a device that provides a wireless communication function service, is usually located on a network side, and includes but is not limited to a next-generation NodeB (gNodeB, gNB) in a 5th generation (5th generation, 5G) communication system, a next-generation base station in a 6th generation (6th generation, 6G) mobile communication system, a base station in a future mobile communication system, an access node in a Wi-Fi system, an evolved NodeB (evolved NodeB, eNB) in an LTE system, a radio network controller (radio network controller, RNC), a NodeB (NodeB, NB), a base station controller (base station controller, BSC), a home NodeB (for example, a home evolved NodeB or a home Node B, HNB), a baseband unit (base band unit, BBU), a transmission reception point (transmission reception point, TRP), a transmitting point (transmitting point, TP), a base transceiver station (base transceiver station, BTS), and the like. In a network structure, the access network device may include a central unit (central unit, CU) node, a distributed unit (distributed unit, DU) node, a RAN device including a CU node and a DU node, or a RAN device including a CU control plane node, a CU user plane node, and a DU node. The access network device may serve a cell. User equipment communicates with a base station by using a transmission resource (for example, a frequency domain resource or a frequency spectrum resource) used for the cell. The cell may be a cell corresponding to the base station (for example, a base station). The cell may belong to a macro base station, or may belong to a base station corresponding to a small cell (small cell). The small cell herein may include a metro cell (metro cell), a micro cell (micro cell), a pico cell (pico cell), a femto cell (femto cell), or the like. These small cells have features of small coverage and low transmit power, and are applicable to providing a high-rate data transmission service. Alternatively, the network device may be a base station device in a 5G network or a network device in a future evolved public land mobile network (public land mobile network, PLMN) network. The radio access network device may be a macro base station, or may be a micro base station or an indoor base station, or may be a relay node or a donor node, or may be a device that provides a wireless communication service for user equipment in a V2X communication system, a radio controller in a cloud radio access network (cloud radio access network, CRAN) scenario, a relay station, a vehicle-mounted device, a wearable device, a network device in a future evolved network, or the like. A specific technology and a specific device form that are used for the radio access network device are not limited in embodiments of this application. For ease of description, the following provides descriptions by using an example in which the radio access network device is a base station.

A terminal may also be referred to as a terminal device, user equipment (user equipment, UE), a mobile station (mobile station, MS), a mobile terminal (mobile terminal, MT), or the like, and may be an entity, on a user side, configured to receive or transmit a signal, for example, a mobile phone. The terminal device may be user equipment (user equipment, UE). The UE includes a handheld device, a vehicle-mounted device, a wearable device, or a computing device that has a wireless communication function. For example, the UE may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in smart grid, a wireless terminal in smart city (smart city), a wireless terminal in smart home (smart home), or the like. The terminal may be widely used in various scenarios, for example, device-to-device (device-to-device, D2D), vehicle-to-everything (vehicle to everything, V2X) communication, machine type communication (machine-type communication, MTC), internet of things (internet of things, IOT), virtual reality, augmented reality, industrial control, autonomous driving, telemedicine, smart grid, smart furniture, smart office, smart wearable, smart transportation, and smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. In embodiments of this application, an apparatus configured to implement a function of the terminal may be a terminal, or may be an apparatus that can support the terminal in implementing the function, for example, a chip system, a communication module, or a modem. The apparatus may be installed in the terminal. In embodiments of this application, the chip system may include a chip, or may include a chip and another discrete component. In the technical solutions provided in embodiments of this application, an example in which the apparatus configured to implement a function of the terminal is a terminal and the terminal is UE is used to describe the technical solutions provided in the embodiments of this application. A specific technology and a specific device form that are used for the terminal device are not limited in embodiments of this application.

Optionally, the UE may alternatively be configured to serve as a base station. For example, the UE may serve as a scheduling entity that provides a sidelink signal between UE in vehicle-to-everything (vehicle-to-everything, V2X), device-to-device (device-to-device, D2D), peer-to-peer (peer to peer, P2P), or the like.

The base station and the terminal may be at fixed locations or are movable. The base station and the terminal may be deployed on the land, including an indoor device, an outdoor device, a handheld device, or a vehicle-mounted device; or may be deployed on the water; or may be deployed on an airplane, a balloon, or an artificial satellite in the air. Application scenarios of the base station and the terminal are not limited in embodiments of this application.

Communication between a base station and a terminal, between base stations, or between terminals may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, a function of the base station may also be performed by a module (for example, a chip) in the base station, or may be performed by a control subsystem including the function of the base station. The control subsystem including the function of the base station herein may be a control center in an application scenario of the foregoing terminal, such as smart grid, industrial control, smart transportation, or smart city. The function of the terminal may alternatively be performed by a module (for example, a chip or a modem) in the terminal, or may be performed by an apparatus including the function of the terminal.

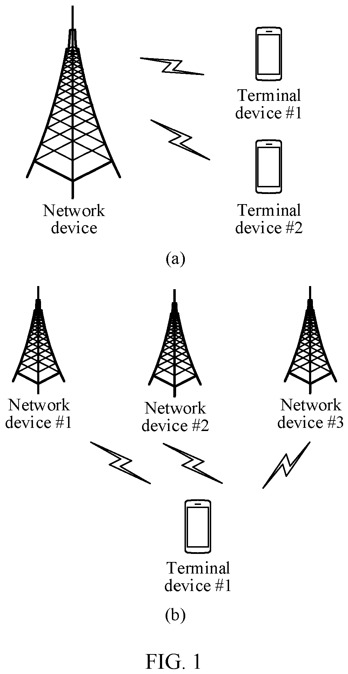

FIG. 1 is a diagram of a communication system architecture to which this application is applicable. As shown in (a) in FIG. 1, a single network device may transmit data or control signaling to one or more terminal devices. As shown in (b) in FIG. 1, a plurality of network devices may also simultaneously transmit data or control signaling to a single terminal device.

For ease of understanding of technical solutions of this application, the following briefly describes related terms in this application.

### 1. Beam

The beam may be embodied as a spatial domain filter (spatial domain filter) in a new radio (new radio, NR) protocol, or may be referred to as a spatial filter (spatial filter), a spatial domain parameter (spatial domain parameter), a spatial parameter (spatial parameter), a spatial domain setting (spatial domain setting), a spatial setting (spatial setting), QCL (quasi-co location, Quasi-colocation) information, a QCL assumption, a QCL indication, or the like. The beam may be indicated by using a transmission configuration indicator state (TCI-state) parameter or a spatial relation (spatial relation) parameter. Therefore, in this application, the beam may be replaced with the spatial domain filter, the spatial filter, the spatial domain parameter, the spatial parameter, the spatial domain setting, the spatial setting, the QCL information, the QCL assumption, the QCL indication, the TCI state (a DL TCI-state and a UL TCI-state), the spatial relation, or the like. The foregoing terms are also equivalent to each other. Alternatively, the beam may be replaced with another term for representing the beam. This is not limited in this application.

A beam for sending a signal may be referred to as a transmit beam (transmission beam, Tx beam), or may be referred to as a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting). A downlink transmit beam may be indicated by using a TCI state.

A beam for receiving a signal may be referred to as a receive beam (reception beam, Rx beam), or may be referred to as a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting). An uplink transmit beam may be indicated by using a spatial relation spatial relation, an uplink TCI state, or a sounding reference signal (sounding reference signal, SRS) resource (indicating a transmit beam using the SRS). Therefore, the uplink beam may also be replaced with the SRS resource.

The transmit beam may mean distribution of signal strength formed in different directions in space after a signal is transmitted via an antenna. The receive beam may mean distribution of signal strength, in different directions in space, of a radio signal received from an antenna.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital/analog beamforming technology, or the like.

The beam usually corresponds to a resource. For example, during beam measurement, the network device measures different beams by using different resources, the terminal device feeds back measured resource quality, and the network device learns of quality of a corresponding beam. During data transmission, beam information is also indicated by using a resource corresponding to the beam information. For example, the network device may indicate PDSCH beam information of the terminal device by using a TCI field in downlink control information (downlink control information, DCI).

Optionally, a plurality of beams having a same communication feature or similar communication features are considered as one beam. One beam may include one or more antenna ports, configured to transmit a data channel, a control channel, a sounding signal, and the like. The one or more antenna ports forming the one beam may also be considered as one antenna port set.

The technology for forming the beam may be the beamforming technology or another technology. For example, the beamforming technology may be specifically the digital beamforming technology, the analog beamforming technology, the hybrid digital/analog beamforming technology, or the like. The transmit beam may mean distribution of signal strength formed in different directions in space after a signal is transmitted via an antenna. The receive beam may mean distribution of signal strength, in different directions in space, of a radio signal received from an antenna.

Beamforming can be used at both a transmitting end and a receiving end to implement spatial selectivity. An omnidirectional beam is represented as uniform radiation or approximately uniform radiation in all directions in a directivity pattern, that is, generally referred to as non-directional or approximately non-directional. A directional beam is represented as radiation in a specific angle range in a horizontal directivity pattern, that is, generally referred to as directional.

A beam pairing relationship is a pairing relationship between a transmit beam and a receive beam, that is, a pairing relationship between a spatial domain transmit parameter and a spatial domain receive parameter. A large beamforming gain can be obtained through signal transmission between a transmit beam and a receive beam that have a beam pairing relationship.

In an implementation, the transmitting end may send a reference signal through beam sweeping, and the receiving end may also receive a reference signal through beam sweeping. Specifically, the transmitting end may form different directional beams in space through beamforming, and may perform polling on a plurality of different directional beams, to transmit a reference signal through the different directional beams, so that power of transmitting the reference signal can be maximized in a direction directed by a transmit beam. The receiving end may also form different directional beams in space through beamforming, and may perform polling on a plurality of different directional beams, to receive a reference signal through the different directional beams, so that power of receiving the reference signal by the receiving end can be maximized in a direction directed by a receive beam.

The receiving end may perform channel measurement based on the received reference signal by traversing transmit beams and receive beams, and report a measurement result to the transmitting end. For example, the receiving end may report some reference signal resources with large reference signal received power (reference signal received power, RSRP) to the transmitting end, for example, may report a reference signal resource identifier, so that the transmitting end sends and receives signals based on a beam pairing relationship with good channel quality during data or signaling transmission.

In embodiments of this application, unless otherwise specified, the beam is a transmit beam of the network device. During beam measurement, each beam of the network device corresponds to one resource. Therefore, an index of a resource may uniquely identify a beam corresponding to the resource. For example, during beam measurement, there is a correspondence between a beam and a resource (the network device sends, by using one beam, a resource corresponding to the beam), and measuring quality of the resource by the terminal device is equivalent to measuring quality of the beam. The resource may be an uplink signal resource (for example, an uplink reference signal), or may be a downlink signal resource (for example, a downlink reference signal).

### 2. Resource

In this application, the "resource" may be a frequency domain resource, a time domain resource, a resource block (resource block, RB), a physical resource block (physical resource block, PRB), or the like. For example, data or information may be carried on a time-frequency resource, where the "time-frequency resource" may include a time domain resource and a frequency domain resource. In time domain, the time-frequency resource may include one or more time units. One time unit may be one symbol, one mini-slot (Mini-slot), one slot (slot), or one subframe (subframe). Duration of one subframe in time domain may be 1 millisecond (ms). One slot includes 7 or 14 symbols. One mini-slot may include at least one symbol (for example, 2 symbols, 4 symbols, 7 symbols, or any quantity of symbols fewer than or equal to 14 symbols).

### 3. Reference signal (reference signal, RS)

The reference signal may also be referred to as a pilot signal (pilot signal), and is a known signal that is provided by a transmitting end device for a receiving device and that is used for channel estimation, channel measurement, channel detection, channel demodulation, or the like.

In embodiments of this application, the reference signal may be used in a physical layer (physical layer), and does not carry data information from a higher layer. In addition, the reference signal may include a downlink reference signal and an uplink reference signal.

The downlink reference signal includes a downlink cell-specific reference signal (cell-specific reference signal, CRS), a downlink terminal device-specific reference signal (UE-specific reference signal, UE-RS), a channel state information reference signal (channel state information reference signal, CSI-RS) used for downlink channel measurement, a downlink group-specific reference signal (group-specific reference signal, GRS), a downlink positioning reference signal (positioning RS, PRS), a downlink beam reference signal (beam reference signal, BRS), a downlink beam refinement reference signal (beam refinement reference signal, BRRS), a downlink phase compensation reference signal (phase compensation reference signal, PCRS), a downlink pathloss reference signal (pathloss reference signal, PL-RS), or the like. The downlink UE-RS is also referred to as a downlink demodulation reference signal (demodulation reference signal, DMRS) and a synchronization signal/physical broadcast channel block (synchronization system/physical broadcast channel block, SS/PBCH block). The SS/PBCH block may be referred to as a synchronization signal block (synchronization signal block, SSB) for short.

The uplink reference signal includes a demodulation reference signal (demodulation reference signal, DMRS) used for uplink demodulation, a sounding reference signal (sounding reference signal, SRS) used for uplink channel measurement, an uplink PCRS, or the like. ADMRS used for physical uplink control channel (physical uplink control channel, PUCCH) demodulation is referred to as a PUCCH DMRS, and a DMRS used for physical uplink shared channel (physical uplink shared channel, PUSCH) demodulation is referred to as a PUSCH DMRS.

In addition to the reference signal, the reference signal in this application may alternatively be a sequence signal in a sequence signal set with a good correlation feature. The good correlation feature means that any sequence in the set has a relatively large autocorrelation peak, and any two sequences in the set have a relatively small cross-correlation peak. To be specific, in embodiments of this application, a sending device may send a plurality of signals, where at least one of the signals is a sequence signal having the foregoing good correlation feature, for example, a pseudo random (pseudo random) sequence and a Zadoff-chu (Zadoff-chu) sequence.

Specifically, correlation means that correlation calculation is performed between one sequence signal and another sequence signal that are in a same set, to obtain a correlation value. Therefore, for a sequence signal having the good correlation feature, the receiving device can detect, based on the correlation feature, whether the signal exists. In other words, the sequence signal having the correlation feature is transmitted without a need to use a detection mechanism such as a pilot. As one of signals having the good correlation feature, reference signals (namely, pilot signals) may be listed.

It should be understood that the foregoing listed specific example of the sequence signal is merely for illustrative description, and this application is not limited thereto. For example, the sequence signal may alternatively be a signal used to carry feedback information (for example, acknowledgment (ACK) information or negative acknowledgment (NACK) information), a resource request signal, or a measurement request signal.

### 4. Antenna port (antenna port)

Channel states of signals from a same antenna port are the same, which may also be understood as that a channel state of one signal may be deduced from a channel state of another signal on a same port.

### 5. Quasi co-location (quasi-co-location, QCL)

On different ports, a large-scale attribute of a channel that a signal of one port passes through may be deduced from a large-scale attribute of a signal of another port. For example, two different signals are transmitted from two antennas that are very close to each other. Due to fading, the two signals may experience different channel states, but large-scale parameters of two channels may be the same. In this case, although the two signals correspond to different antenna ports, the two signals are quasi co-located. It may also be understood that, if some large-scale parameters of the two ports are consistent, regardless of whether actual physical locations of the two ports are different, the terminal device may consider that the two ports are transmitted from a same location.

The foregoing large-scale parameter may include, for example, a Doppler shift (Doppler shift), a Doppler spread (Doppler spread), an average delay (average delay), a delay spread (delay spread), or a spatial receive parameter (spatial RX parameter). Based on this, the quasi co-location may be further classified into four types. For example, QCL Type A includes a Doppler shift, a Doppler spread, an average delay, and a delay spread, and QCL Type A may be used to obtain channel estimation information; QCL Type B includes a Doppler shift and a Doppler spread, and QCL Type B may be used to obtain channel estimation information; QCL Type C includes a Doppler shift and an average delay, and QCL Type C may be used to obtain measurement information such as reference signal received power (reference signal received power, RSRP); and QCL Type D includes a spatial Rx parameter, and QCL Type D may be used to assist the terminal device in beamforming.

QCL Type A, QCL Type B, and QCL Type C are similar to LTE QCL Type. For example, if two reference signals are QCL Type B, the terminal device considers that the two reference signals have a same Doppler shift and Doppler spread, and therefore the terminal device may obtain the Doppler shift and the Doppler spread from a reference signal #1 for channel estimation of a reference signal #2. For example, the CSI-RS has a low time-domain density (this design can reduce overheads), and consequently a time-varying parameter of a channel cannot be accurately estimated. Therefore, a Doppler parameter of the CSI-RS may be obtained from a time reference signal (time reference signal, TRS). Because a frequency domain density of the CSI-RS is sufficient, frequency domain parameters such as an average delay and a delay spread may be obtained from the CSI-RS. NR has a plurality of reference signals used for different purposes. In this way, QCL relationships between various references (which may also be understood as reference signals) and configurations are involved.

### 6. Transmission configuration indicator state (transmission configuration indicator state, TCI state)

A higher layer in a protocol may configure a QCL by using a TCI state, and the TCI state is used to configure a quasi co-location relationship between one or two downlink reference signals and a DMRS of a PDSCH. The TCI state includes one or two QCL relationships. The QCL represents a consistency relationship between a signal/channel to be received currently and a previously known reference signal. If there is a QCL relationship, the terminal device may receive or send an upcoming signal/channel by inheriting a receive or transmit parameter used for previously receiving or sending a reference signal. In other words, the TCI state may indicate a QCL relationship between a reference signal #A and a reference signal #B.

The TCI state configures the following: The QCL defines a relationship between reference signals, and therefore a source reference signal (source RS) and a target reference signal (target RS) are obtained. The TCI state indicates a QCL source reference signal and QCL Type of a large-scale parameter that can be obtained from the QCL source reference signal. Two pairs (pair) of a source reference signal and QCL Type may be configured for each TCI state, for example, TCI state #1: source RS #1→QCL Type X; and TCI state #2: source RS #2→QCL Type Y, where X and Y correspond to one of QCL Type A, QCL Type B, QCL Type C, and QCL Type D, and X and Y are different. TCI state #1 + TCI state #2 may be referred to as one TCI state configuration. The network device configures, in a target reference signal resource configuration (for example, a CSI-RS) or in a PDSCH/PDCCH configuration (for example, a DMRS), a TCI state that can be used by the network device. In this case, a target reference signal corresponds to the TCI state, which may also be understood as that measurement information of the target reference signal may be obtained through a TCI state configuration.

There is a delay in spatial transmission of a signal, and a longer distance between the terminal device and the network device indicates a longer delay in arrival of a signal, sent by the terminal device, at the network device. Different terminal devices have different distances from the network device. Therefore, differences between time of arrival of signals, sent by different terminal devices, at the network device are also different. For example, the network device sends downlink information to a plurality of terminal devices at a same moment, the terminal devices receive the downlink information at different time, and then uplink information sent by the terminal devices based on the downlink information also arrives at the network device at different time, that is, uplink information sent by different terminal devices arrives at the network device at different moments.

### 7. Adjustment amount T_{A} of an uplink sending timing advance

In an existing protocol, in a random access process, after being powered on, the terminal device performs cell search, and obtains downlink time synchronization by using a primary synchronization signal and a secondary synchronization signal that are broadcast in a cell, so that a downlink frame of the terminal device is aligned with a received frame sent by the network device. Then, the network device sends a physical random access channel (physical random access channel, PRACH) preamble (preamble) to the terminal device, determines an uplink sending timing advance, and then indicates the uplink sending timing advance to the terminal device by using a timing advance command (time advance command, TAC) field in a random access response (random access response, RAR) message, so that the terminal device determines the uplink sending timing advance *N*_{TA} based on the TAC field. Herein, the TAC field carried in the RAR message may be understood as an initial value of the uplink sending timing advance, a length is 12 bits, and a value ranges from 0 to 3846.

When the terminal device completes random access and is in a connected state, because a location of the terminal device may change continuously, a signal transmission path may also change. Therefore, the network device needs to continuously maintain ("maintain" may also be understood as "update") the uplink sending timing advance. For example, the network device may update the uplink sending timing advance by using media access control control element (media access control-control element, MAC CE) signaling. A TAC field in the MAC CE signaling indicates an adjustment amount T_{A} of the uplink sending timing advance, a length is 64 bits, and a value ranges from 0 to 64. If the terminal device receives, in a slot n, the MAC CE signaling carrying the TAC, for example, the terminal device may start to apply the timing adjustment amount in a slot n+k+1 (k is an integer greater than 0, and k may be a slot granularity or a symbol granularity). In other words, generally, the adjustment amount T_{A} of the uplink sending timing advance indicated by the network device to the terminal device starts to take effect in a (k+1)^{th} slot after the TAC command is received.

### 8. Uplink sending timing advance N_{TA}

The terminal device may obtain an initial value of the uplink sending timing advance *N*_{TA} based on initial T_{A} sent by the network device. A conversion relationship between *N*_{TA} and T_{A} is: N_{TA}=T_{A}·16·64/2^{µ} (unit: T_{c}), where µ is related to a subcarrier spacing, *T_{c} =* 1/(*Δfₘₐₓ* · *N_{f}*), *Δfₘₐₓ* = 480 · 10³, *N_{f}* = 4096, and T_{c}=0.509 ns. Alternatively, it may be understood that, in a communication process, the network device actually indicates T_{A} to the terminal device, but the terminal device converts T_{A} into *N*_{TA} for calculation. In a scenario in which the network device updates the uplink sending timing advance, the network device may indicate the adjustment amount T_{A} of the uplink sending timing advance by using the MAC CE signaling, that is, an updated uplink sending timing advance is: N_{TA,new}=N_{TA,old}+(T_{A}-31)×16×64/2^{µ} (unit: T_{c}).

It should be understood that an actual time at which the terminal device sends an uplink signal is a period of time earlier than the uplink sending timing advance indicated by the network device, and T_{TA}=(N_{TA}+N_{TA,offset}) (unit: T_{c}). N_{TA,offset} is configured by using a radio resource control (radio resource control, RRC) parameter n-Timing Advance Offset, and may be 0, 25600, or 39936. If this parameter is not configured (for example, in an initial access phase), a default value may be determined by using Table 7.1.2-2 in the technical specification (technical specification, TS) 38.133. N_{TA} may be determined by the terminal device by using the TAC field carried in the RAR signaling or the MAC CE signaling.

To ensure orthogonality of uplink transmission and avoid intra-cell (intra-cell) interference, the network device requires that signals from different terminal devices in a same slot (slot) but on different frequency domain resources arrive at the network device at basically aligned time, and the network device can correctly receive uplink data sent by the terminal device, provided that the uplink signal sent by the terminal device falls within a cyclic prefix (cyclic prefix, CP) range. Therefore, uplink sending of the terminal device requires timing advance (time advance, TA), and uplink sending timing advances of different terminal devices are different. The network device estimates the timing advance of the terminal by using a PRACH or an SRS signal sent by the terminal device, and notifies the terminal device of the determined uplink sending timing advance by using a random access response RAR or a timing advance command (time advance command, TAC).

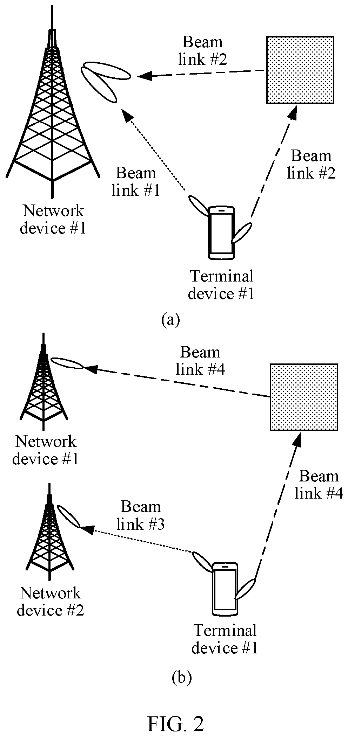

Currently, when the terminal device communicates with the network device, one serving cell maintains only one uplink sending timing advance, and does not maintain an uplink sending timing advance of a non-serving cell. For example, when communicating with two network devices at the same time, the terminal device uses only one uplink sending timing advance (time advance, TA). However, generally, there are a plurality of beam pair links (beam pair link, BPL) between the terminal device and the network devices, as shown in FIG. 2. For example, as shown in (a) in FIG. 2, a terminal device #1 communicates with a network device #1 through two beam pair links: a beam link #1 and a beam link #2, where propagation paths of signals on the link #1 and the link #2 differ greatly (which may also be understood as that a channel state of the signal on the beam link #1 and a channel state of the signal on the beam link #2 differ greatly). As shown in (b) in FIG. 2, the terminal device #1 communicates with the network device #1 through a beam link #3, and the terminal device #1 communicates with a network device #2 through a beam link #4, where propagation paths of signals on the link #3 and the link #4 differ greatly. If propagation paths of signals on links differ slightly, the terminal device may use a same uplink sending timing advance. However, when the propagation paths of the signals on the links differ greatly, how to determine an uplink sending timing advance becomes a technical problem that needs to be resolved.

(a) in FIG. 2 is used as an example. If the terminal device #1 communicates with the network device #1 by using an uplink sending timing advance #1, time at which data sent by the terminal device #1 through the beam link #1 arrives at the network device #1 is not aligned with time at which data sent by the terminal device #1 through the beam link #2 arrives at the network device #1. Therefore, interference is caused when the network device receives the data sent by the terminal device #1, and consequently data transmission performance is affected. In this scenario, how the terminal device and the network device maintain an uplink sending timing advance becomes a technical problem that needs to be resolved.

In view of this, this application provides a communication method. A network device may configure at least two uplink sending timing advances for a terminal device, and the terminal device may determine a configured uplink sending timing advance to be used for transmission of an uplink sending resource. This can improve performance of data transmission between the terminal device and the network device.

It should be noted that, in this application, all additionally configured uplink sending timing advances proposed in this application are denoted as "first uplink sending timing advances". For example, there may be one or more first uplink sending timing advances. Only one uplink sending timing advance maintained by the terminal device and the network device in the conventional technology is denoted as a "second uplink sending timing advance".

It should be noted that "signaling" in this application may be control information or higher layer signaling. For example, the control information may be downlink control information (downlink control information, DCI) or uplink control information (uplink control information, UCI). For example, the higher layer signaling may be radio resource control (radio resource control, RRC) signaling or media access control control element (media access control-control element, MAC CE) signaling. Types of different signaling may be the same or may be different. For example, the signaling may be DCI or UCI, or may be RRC signaling, or may be MAC CE signaling. This is not limited in this application. For example, first signaling may be RRC signaling, second signaling may be MAC CE signaling, and third signaling may also be MAC CE signaling.

In this application, "first information" to "third information" may be, for example, control information, for example, DCI.

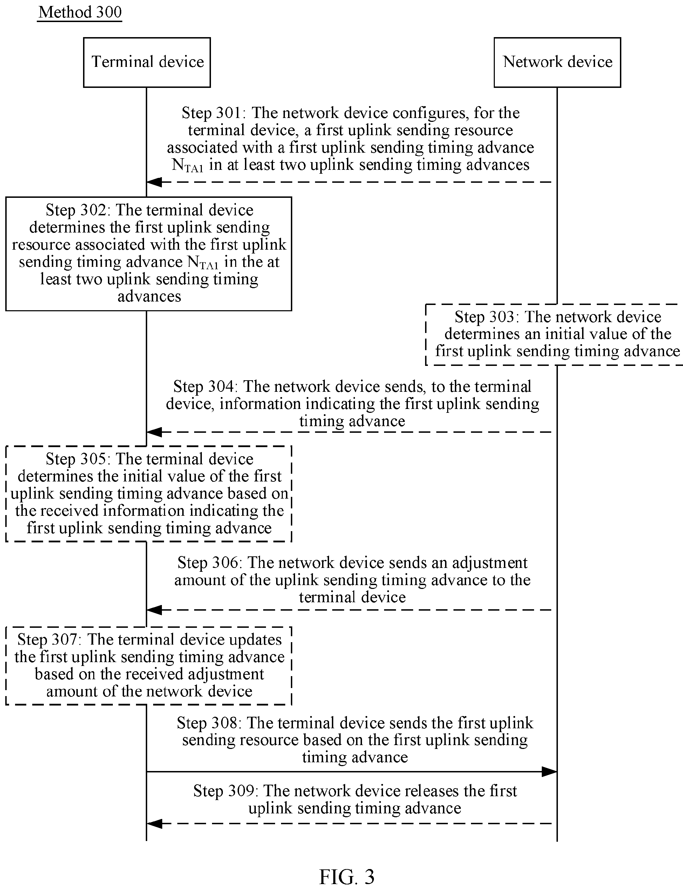

FIG. 3 is a schematic flowchart of a method 300 for determining an uplink sending timing advance according to this application. The following describes steps shown in FIG. 3. It should be noted that steps represented by dashed lines in FIG. 3 are optional. This is not repeated in the following. The method includes:
Optionally, step 301 is included: A network device configures, for a terminal device, a first uplink sending resource associated with a first uplink sending timing advance *N*_{TA1} in at least two uplink sending timing advances.

In this application, the "at least two uplink sending timing advances" may include, for example, the first uplink sending timing advance and a second uplink sending timing advance. In addition, in this application, there may be more than one first uplink sending timing advance, and all first uplink sending timing advances may be different.

For example, the network device may send RRC signaling or a MAC CE to the terminal device, where the signaling indicates the first uplink sending resource associated with the first uplink sending timing advance *N*_{TA1} in the at least two uplink sending timing advances.

It should be understood that, for the first uplink sending resource associated with the first uplink sending timing advance *N*_{TA1} in this application, step 301 is a possible implementation, to be specific, the network device configures, for the terminal device, and indicates, to the terminal device, uplink sending resources associated with the first uplink sending advance. In another implementation, the first uplink sending resource associated with the first uplink sending timing advance *N*_{TA1} in this application may alternatively be predefined in a protocol. In this case, signaling exchange between the terminal device and the network device may not be required.

Step 302: The terminal device determines the first uplink sending resource associated with the first uplink sending timing advance first uplink sending timing advance in the at least two uplink sending timing advances.

In this application, the at least two uplink sending timing advances include the first uplink sending timing advance *N*_{TA1}.

In this application, the first uplink sending resource associated with the first uplink sending timing advance may be understood as that data on the first uplink sending resource may be sent by using the first uplink sending timing advance.

It should be noted that "B associated with A" in this application may be understood as that "there is an association relationship between A and B", "there is a correspondence between A and B", or "there is a mapping relationship between A and B". In this application, "B associated with A" indicates that A may be determined based on B. However, it should be further understood that determining A based on B does not mean that A is determined only based on B, and A may be further determined based on B and/or other information.

Alternatively, a "correspondence" or an "association relationship" in this specification may be expressed as a "mapping relationship".

It should be understood that the "correspondence" in embodiments of this application may be stored or recorded by using a function relationship, a table, a mapping relationship, or the like. In the following embodiments, the "correspondence" may be configured by the network device, or may be predefined in a protocol, or the like. This is not limited.

In a possible implementation, the network device may preconfigure, for the terminal device, a resource associated with the first uplink sending timing advance (denoted as the "first uplink sending resource"). For example, the network device may send an association relationship between the configured first uplink sending timing advance and the first uplink sending resource corresponding to the first uplink sending timing advance to the terminal device, and the terminal device may determine, based on the association relationship, the first uplink sending resource associated with the first uplink sending timing advance. Optionally, for another resource that is not associated with the first uplink sending timing advance (denoted as a "second uplink sending resource"), the second uplink sending resource may be sent by using a second uplink sending timing advance by default specified in the conventional technology.

In another possible implementation, the first uplink sending resource associated with the first uplink sending timing advance may be preconfigured before the network device and the terminal device are delivered from a factory. Optionally, the second uplink sending resource may be sent by using the second uplink sending timing advance by default specified in the conventional technology.

In still another possible implementation, the first uplink sending resource associated with the first uplink sending timing advance may be predefined in the protocol. Optionally, the second uplink sending resource may be sent by using the second uplink sending timing advance by default specified in the conventional technology.

Alternatively, the foregoing implementations may be understood as follows: The network device preconfigures, for the terminal device, the second uplink sending resource associated with the second uplink sending timing advance, or the second uplink sending resource associated with the second uplink sending timing advance may be preconfigured before the network device and the terminal device are delivered from the factory, or the resource associated with the second uplink sending timing advance may be predefined in the protocol. In this case, the terminal device sends a second-type resource device by using the second uplink sending timing advance by default. Therefore, both the network device and the terminal device associate another resource that is not associated with the second uplink sending timing advance with the first uplink sending timing advance by default.

The following mainly describes in detail various implementations in which the network device preconfigures, for the terminal device, the resource associated with the first uplink sending timing advance.

### Method 1

In a possible implementation, the first uplink sending timing advance is associated with a control resource set (control resource set, CORESET) or a control resource set pool (control resource set pool, CORESET pool). In this case, the terminal device may determine that a resource scheduled by using the first control resource set is the first uplink sending resource, where the data on the first uplink sending resource may be sent by using the first uplink sending timing advance.

In an example, the first uplink sending timing advance may be associated with a CORESET pool ID #0. Specifically, the network device may send first signaling (for example, RRC signaling or MAC CE signaling) to the terminal device. The first signaling indicates that the first uplink sending timing advance is associated with the CORESET pool ID #0 (an example of the first control resource set) (that is, the first signaling configures an association relationship between the first uplink sending timing advance and the CORESET pool). In this case, the terminal device may determine, based on the first signaling, that the first uplink sending timing advance is associated with the CORESET pool ID #0. For example, if a CORESET (for example, a CORESET #1) for scheduling an uplink resource is from (which may also be understood as "belong to") the CORESET pool ID #0 (for example, the CORESET pool ID #0 includes a CORESET ID #1 and a CORESET ID #2), the terminal device determines that data on the scheduled uplink resource (that is, the first uplink sending resource) is sent by using the first uplink sending timing advance; or if a CORESET for scheduling an uplink resource is from a CORESET pool ID #1, data on the resource scheduled by using the CORESET pool ID #1 is sent by using the second uplink sending timing advance.

In another example, the first uplink sending timing advance may be associated with a CORESET ID #1 and a CORESET ID #2. Specifically, the network device may send first signaling (for example, RRC signaling or MAC CE signaling) to the terminal device. The first signaling indicates that the first uplink sending timing advance is associated with the CORESET ID #1 and the CORESET ID #2 (that is, the first signaling configures an association relationship between the first uplink sending timing advance and the CORESET). In this case, the terminal device may determine, based on the first signaling, that the first uplink sending timing advance is associated with the CORESET ID #1 and the CORESET ID #2. For example, if a CORESET for scheduling an uplink sending resource is the CORESET ID #1, the terminal device determines that the resource scheduled by using the CORESET ID #1 is the first uplink sending resource, and sends the data on the first uplink sending resource by using the first uplink sending timing advance; or if a CORESET for scheduling an uplink sending resource is a CORESET ID #3, the terminal device sends, by using the second uplink sending timing advance, data on the resource scheduled by using the CORESET ID #3.

It should be understood that, generally, one CORESET pool may include a plurality of CORESETs. For example, the CORESET pool ID #1 may include the CORESET ID #1, the CORESET ID #2, and the CORESET ID #3.

### Method 2

In another possible implementation, a first control resource set (or a resource pool to which the control resource set belongs) configured by the first signaling may be associated with both the first uplink sending timing advance and the second uplink sending timing advance. The network device may send second information to the terminal device. The second information indicates that the first control resource set (or the resource pool to which the control resource set belongs) is associated with the first uplink sending timing advance. In this case, the terminal device may determine, based on the first signaling and the second information, that a resource scheduled by using the first control resource set is the first uplink sending resource, where the data on the first uplink sending resource may be sent by using the first uplink sending timing advance.

In an example, the first signaling indicates that a CORESET pool ID #0 is associated with both the first uplink sending timing advance and the second uplink sending timing advance. In addition, the network device may send the second information (for example, MAC CE signaling) to the terminal device. The second information indicates that the first uplink sending timing advance is associated with the CORESET pool ID #0. In this case, the terminal device may determine, based on the first signaling and the second information, that a resource scheduled by using each CORESET in the CORESET pool ID #0 is the first uplink sending resource, where the first uplink sending resource is associated with the first uplink sending timing advance. For example, the control resource set for scheduling the first uplink sending resource is a CORESET #1, and the CORESET #1 belongs to the CORESET pool ID #0. In this case, the terminal device may determine, based on the first signaling and the second information, that a resource scheduled by using the CORESET #1 is the first uplink sending resource, and the first uplink sending timing advance may be used for the data on the first uplink sending resource.

In another example, a CORESET ID #2 and a CORESET ID #3 may be associated with both the first uplink sending timing advance and the second uplink sending timing advance. Specifically, the network device may send the first signaling to the terminal device. The first signaling indicates an association relationship between the CORESET ID #2 and the CORESET ID #3, and the first uplink sending timing advance. In this case, the terminal device may determine, based on the first signaling, that the CORESET ID #2 and the CORESET ID #3 may be separately associated with the first uplink sending timing advance and the second uplink sending timing advance. In addition, the network device may send the second information to the terminal device. The second information indicates that the first uplink sending timing advance is associated with the CORESET ID #2. For example, if a CORESET for scheduling an uplink sending resource is the CORESET ID #2, the terminal device may determine, based on the first signaling and the second information, that a resource scheduled by using the CORESET ID #2 is the first uplink sending resource. In this case, the terminal device may send the data on the first uplink sending resource by using the first uplink sending timing advance, and the like.

### Method 3

In still another possible implementation, the first uplink sending timing advance is associated with a reference signal of an uplink sending resource, or the first uplink sending timing advance is associated with a transmission configuration indicator state of the uplink sending resource. In this case, the terminal device determines that the uplink sending resource is the first uplink sending resource, where the data on the first uplink sending resource may be sent by using the first uplink sending timing advance.

In an example, the first uplink sending timing advance is associated with a reference signal set #1, and the reference signal set #1 may include {reference signal #1, reference signal #2, and reference signal #3 }. Specifically, the network device sends first signaling to the terminal device, where the first signaling indicates an association relationship between the reference signal set #1 and the first uplink sending timing. In this case, the terminal device determines, based on the association relationship, that the reference signal set #1 is associated with the first uplink sending timing. If the terminal device associates a to-be-sent uplink sending resource with the reference signal #1 (for example, a beam of the uplink sending resource is associated with the reference signal #1, or the uplink sending resource is QCLed with the reference signal #1), because the reference signal #1 belongs to the reference signal set #1, the terminal device determines that the uplink sending resource is the first uplink sending resource, and therefore needs to send the data on the first uplink sending resource by using the first uplink sending timing advance. For another example, if a pathloss reference (pathloss reference, PL RS) signal of the uplink sending resource is associated with the reference signal #2 in the reference signal set #1 (for example, a beam of the pathloss reference signal may be associated with the reference signal #2), the terminal device determines that the uplink sending resource is the first uplink sending resource, and therefore needs to send the data on the first uplink sending resource by using the first uplink sending timing advance. For still another example, if the pathloss reference signal of the uplink sending resource and the reference signal #3 in the reference signal set #1 are quasi co-located, the terminal device determines that the uplink sending resource sending resource is the first uplink sending resource, and may send the data on the first uplink sending resource by using the first uplink sending timing advance.

In an example, the first uplink sending timing advance may be associated with a reference signal #5, a reference signal #6, and a reference signal #9. Specifically, the network device sends first signaling to the terminal device, where the first signaling indicates an association relationship between the reference signal #5, the reference signal #6, and the reference signal #9, and the first uplink sending timing advance. In this case, the terminal device determines, based on the association relationship, that the reference signal #5, the reference signal #6, and the reference signal #9 are associated with the first uplink sending timing advance. For example, if the terminal device associates a to-be-sent uplink sending resource with the reference signal #6, the terminal device determines that the uplink sending resource is the first uplink sending resource, where the first uplink sending timing advance may be used for the data on the first uplink sending resource.

In another example, the first uplink sending timing advance is associated with a transmission configuration indicator state set #2, and the transmission configuration indicator state set #2 may include {transmission configuration indicator state #2, transmission configuration indicator state #4, and transmission configuration indicator state #6}. Specifically, the network device sends first signaling to the terminal device, where the first signaling indicates an association relationship between the transmission configuration indicator state set #2 and the first uplink sending timing advance. In this case, the terminal device determines, based on the association relationship, that the transmission configuration indicator state set #2 is associated with the first uplink sending timing advance. If the terminal device associates a to-be-sent uplink sending resource with the transmission configuration indicator state #4, because the transmission configuration indicator state #4 belongs to the transmission configuration indicator set #2, the terminal device determines that the uplink sending resource is the first uplink sending resource, and may send the data on the first uplink sending resource by using the first uplink sending timing advance.

In an example, the first uplink sending timing advance may be associated with a transmission configuration indicator state #1, the transmission configuration indicator state #2, and the transmission configuration indicator state #4. Specifically, the network device sends first signaling to the terminal device, where the first signaling indicates an association relationship between the transmission configuration indicator state #1, the transmission configuration indicator state #2, and the transmission configuration indicator state #4, and the first uplink sending timing advance. In this case, the terminal device determines, based on the association relationship, that the transmission configuration indicator state #1, the transmission configuration indicator state #2, and the transmission configuration indicator state #4 are associated with the first uplink sending timing advance. If the terminal device associates a to-be-sent uplink sending resource with the transmission configuration indicator state #1, the terminal device determines that the uplink sending resource is the first uplink sending resource, and may send the data on the first uplink sending resource by using the first uplink sending timing advance.

### Method 4

In a possible implementation, a reference signal is associated with both the first uplink sending timing advance and the second uplink sending timing advance, or a transmission configuration indicator state is associated with both the first uplink sending timing advance and the second uplink sending timing advance. In this case, the network device may send third information to the terminal device, where the third information indicates that a first reference signal of an uplink sending resource or a first transmission configuration indicator state of the uplink sending resource is associated with the first uplink sending timing. In this case, the terminal device determines that the uplink sending resource is the first uplink sending resource, where the data on the first uplink sending resource may be sent by using the first uplink sending timing advance.

In an example, the network device may send first signaling to the terminal device, where the first signaling indicates that a reference signal set #1 is associated with both the first uplink sending timing advance and the second uplink sending timing advance. The terminal device determines, based on the first signaling, that the reference signal set #1 is associated with both the first uplink sending timing advance and the second uplink sending timing advance. The network device sends third information to the terminal device, where the third information indicates that the reference signal of the uplink sending resource is associated with the first uplink sending timing advance. Assuming that the uplink sending resource is associated with a reference signal #1, the terminal device determines, based on the first signaling and the third information, that the uplink sending resource is the first uplink sending resource, where the data on the first uplink sending resource may be associated by using the first uplink sending timing advance.

In an example, a reference signal #5, a reference signal #6, and a reference signal #9 are associated with both the first uplink sending timing advance and the second uplink sending timing advance. Specifically, the network device sends first signaling to the terminal device, where the first signaling indicates that the reference signal #5, the reference signal #6, and the reference signal #9 are associated with both the first uplink sending timing advance and the second uplink sending timing advance. In this case, the terminal device determines that the reference signal #5, the reference signal #6, and the reference signal #9 are associated with both the first uplink sending timing advance and the second uplink sending timing advance. In addition, the network device sends third information to the terminal device, where the third information indicates that the reference signal #6 is associated with the first uplink sending timing advance. If the terminal device associates a to-be-sent uplink sending resource with the reference signal #6, the terminal device determines that the uplink sending resource is the first uplink sending resource, where the first uplink sending timing advance may be used for the data on the first uplink sending resource.

In another example, a transmission configuration indicator state set #2 is associated with both the first uplink sending timing advance and the second uplink sending timing advance, and the transmission configuration indicator state set #2 may include {transmission configuration indicator state #2, transmission configuration indicator state #4, and transmission configuration indicator state #6}. Specifically, the network device sends first signaling to the terminal device, where the first signaling indicates that the transmission configuration indicator state set #2 is associated with both the first uplink sending timing advance and the second uplink sending timing advance. In this case, the terminal device determines that the transmission configuration indicator state set #2 is associated with both the first uplink sending timing advance and the second uplink sending timing advance. The network device sends third information to the terminal device, where the third information indicates that the transmission configuration indicator state set #2 is associated with the first uplink sending timing advance. If the terminal device associates a to-be-sent uplink sending resource with the transmission configuration indicator state #4, because the transmission configuration indicator state #4 belongs to the transmission configuration indicator state set #2, the terminal device determines that the uplink sending resource is the first uplink sending resource, where the first uplink sending timing advance may be used for the data on the first uplink sending resource.

In an example, a transmission configuration indicator state #1, the transmission configuration indicator state #2, and the transmission configuration indicator state #4 are associated with both the first uplink sending timing advance and the second uplink sending timing advance. Specifically, the network device sends first signaling to the terminal device, where the first signaling indicates that the transmission configuration indicator state #1, the transmission configuration indicator state #2, and the transmission configuration indicator state #4 are associated with both the first uplink sending timing advance and the second uplink sending timing advance. In this case, the terminal device determines that the transmission configuration indicator state #1, the transmission configuration indicator state #2, and the transmission configuration indicator state #4 are associated with both the first uplink sending timing advance and the second uplink sending timing advance. The network device sends third information to the terminal device, where the third information indicates that the transmission configuration indicator state #1 is associated with the first uplink sending timing advance. If the terminal device associates a to-be-sent uplink sending resource with the transmission configuration indicator state #1, the terminal device determines that the uplink sending resource is the first uplink sending resource, where the first uplink sending timing advance may be used for the data on the first uplink sending resource.

### Method 5

In a possible implementation, a transmission configuration indicator state field (or a reference signal resource indication (SRS resource indication, SRI) field) is implicitly associated with the first uplink sending timing advance. For example, it may be specified that, if a first transmission configuration indicator state field indicates a transmission configuration indicator state of an uplink sending resource, the terminal device determines that the uplink sending resource is the first uplink sending resource, where the first uplink sending timing advance may be used for the data on the first uplink sending resource.

In an example, first information sent by the network device to the terminal device includes at least two transmission configuration indicator state fields. If a transmission configuration indicator state field #1 indicates a transmission configuration indicator state of an uplink sending resource, the terminal device determines that the sending resource is the first uplink sending resource, where the first uplink sending timing advance may be used for the data on the first uplink sending resource.

In another example, first information sent by the network device to the terminal device includes at least two reference signal resource indication fields. If a reference signal resource indication field #1 indicates a reference signal resource of an uplink sending resource, the terminal device determines that the uplink sending resource is the first uplink sending resource, where the first uplink sending timing advance may be used for the data on the first uplink sending resource.

### Method 6

In a possible implementation, first signaling may include a first field, and the field explicitly indicates that an uplink sending resource is associated with the first uplink sending timing advance. In this case, the terminal device determines that the resource is the first uplink sending resource, where the first uplink sending timing advance may be used for the data on the first uplink sending resource.

In an example, the first signaling is DCI signaling. When DCI schedules an uplink resource, the first field is added to clearly indicate whether the first uplink sending timing advance or the second uplink sending timing advance is used for the uplink sending resource. For example, a 1-bit indication field is added. When a value of the bit is 0, the first uplink sending timing advance is used for the uplink sending resource. When a value of the bit is 1, the second uplink sending timing advance is used for the uplink sending resource. Alternatively, a 2-bit indication field is added to indicate a timing advance group (time advance group, TAG) identifier, where a TAG is associated with an uplink sending timing advance, and each TAG identifier corresponds to one TAG. In this case, the timing advance corresponding to the TAG identifier is used for uplink sending on the uplink sending resource.

Optionally, step 303 is further included: The network device determines an initial value of the first uplink sending timing advance.

For example, the network device may trigger the terminal device to send a specific PRACH preamble, to determine the initial value of the first uplink sending timing advance; or the network device may trigger the terminal device to report a downlink sending timing advance difference (for example, a time difference between simultaneous sending of downlink data by two network devices and receiving of the data by the terminal), and the network device determines the initial value of the first uplink sending timing based on the first uplink sending timing advance and the downlink sending timing difference; or the network device may determine the first uplink sending timing by measuring an SRS signal sent by the terminal. A specific implementation in which the network device determines the initial value of the first uplink sending timing advance is not limited in this application.

Step 304: The network device sends, to the terminal device, information indicating the first uplink sending timing advance. Correspondingly, the terminal device receives, from the network device, the information indicating the first uplink sending timing advance.

### Method 1

The network device sends, to the terminal device, information indicating a first offset between the first uplink sending timing advance and the second uplink sending timing advance. As described above, it may be understood that the second uplink sending timing advance exists in the conventional technology, that is, may be an uplink sending timing advance indicated by the network device to the terminal device based on an existing protocol. Therefore, for the first uplink sending timing advance introduced in this application, information related to an offset of the second uplink sending timing advance may be indicated, so that the terminal device determines the first uplink sending timing advance.

For example, the network device may send the information about the offset between the first uplink sending timing advance and the second uplink sending timing advance to the terminal device by using MAC CE signaling, where the signaling may include a field indicating the offset. The terminal device determines the first uplink sending timing advance based on *N*_{TA1} = *N*_{TA2} *+ offset* · 16 · 64/2*^{µ}* (that is, the first offset between the first uplink sending timing advance and the second uplink sending timing advance is: *offset* · 16 · 64/2*^{µ}*). In the technology described above, the network device dynamically updates an adjustment amount T_{A2} of the second uplink sending timing advance. For example, T_{A2} may be updated by using a TAC field in the MAC CE signaling.

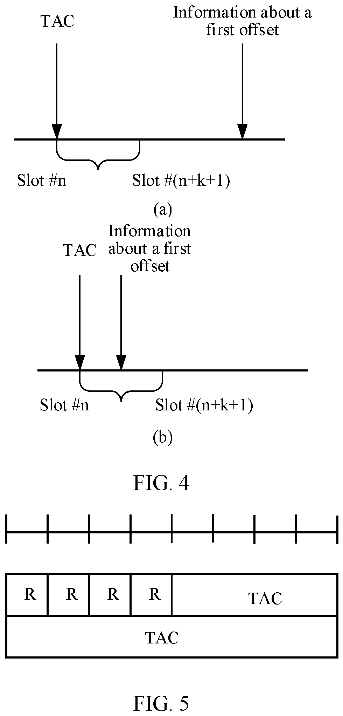

As shown in (a) in FIG. 4, in a scenario, it is assumed that the terminal receives, in a slot (slot) #n, the MAC CE signaling that carries the TAC, that is, the network device indicates the terminal device to update the adjustment amount T_{A2} (that is, information about a second adjustment amount) of the second uplink sending timing advance. In addition, indication information that is received by the terminal after a slot #(n+k+1) and that includes the offset takes effect, that is, the network device indicates the information about the first offset between the first uplink sending timing advance and the second uplink sending timing advance.

In other words, the network device first sends the adjustment amount of the second uplink sending timing advance to the terminal device, and after the adjustment amount takes effect, the information that is received by the terminal device and that indicates the first offset takes effect. In this case, the terminal device may first determine that an updated second uplink sending timing advance is: *N*_{TA2_new}=N_{TA2 old}+(T_{A2}-31)×16×64/2^{µ}, and then determine the first uplink sending timing advance *N*_{TA1} based on *N*_{TA2_new} and the first offset, that is, *N*_{TA1} = *N*_{TA2_new} + *offset* · 16 · 64/2*^{µ}* = *N*_{TA2_old} + (*T*_{A2} *+ offset -* 31) · 16 · 64/2*^{µ}*.

As shown in (b) in FIG. 4, in another scenario, it is assumed that the terminal receives, in a slot #n, the MAC CE signaling that carries the TAC, that is, the network device indicates the terminal device to update the adjustment amount T_{A2} of the second uplink sending timing advance. In addition, indication information that is received by the terminal device before a slot #n+k+1 and that includes the offset takes effect, that is, the network device indicates the information about the first offset between the first uplink sending timing advance and the second uplink sending timing advance.

In other words, the network device first sends the adjustment amount of the second uplink sending timing advance to the terminal device, and before the adjustment amount takes effect, the information that is sent to the terminal device and that indicates the first offset takes effect. In this case, although the terminal device receives the adjustment amount of the second uplink sending timing advance, because the adjustment amount does not take effect, the terminal device receives the information indicating the first offset. In this case, the terminal device may determine the first uplink sending timing advance *N*_{TA1} based on *N*_{TA2_old} and the first offset, that is, *N*_{TA1} = *N*_{TA2_old} + *offset* · 16 · 64/2*^{µ}*.

Alternatively, if the terminal device does not successfully receive the adjustment amount of the second uplink sending timing advance or the network device does not send the adjustment amount of the second uplink sending timing advance, and the terminal device receives only the information about the first offset, the terminal device may determine the first uplink sending timing advance *N*_{TA1} based on *N*_{TA2_old} and the first offset, that is, *N*_{TA1} = *N*_{TA2_old} *+ offset* · 16 · 64/2*^{µ}*.

### Method 2

The network device directly sends the initial value of the first uplink sending timing advance to the terminal device. For example, the network device may determine the first uplink sending timing advance based on a received specific PRACH resource sent by the terminal device, and then send a corresponding RAR to the terminal, where the RAR includes initial value information of the uplink sending timing advance.

In an example, a PDCCH order (an example of second control information) for scheduling a PRACH explicitly or implicitly indicates that the uplink sending timing advance included in the signaling is the first uplink sending timing advance. After blindly detecting a PDCCH, the terminal device can learn that the uplink sending timing advance included in the RAR signaling that responds to the PRACH scheduled by using the PDCCH order is the first uplink sending timing advance. For example, if the PDCCH order carries a physical cell identifier (physical cell identifier, PCI) of a neighboring cell, the RAR signaling that responds to the PRACH scheduled by using the PDCCH order carries an uplink sending timing advance of the neighboring cell. For example, the uplink sending timing advance included in the RAR corresponding to the TAG ID or the PRACH indicated by the PDCCH order is the first uplink sending timing advance. For another example, the terminal device implicitly determines, based on a CORESET pool corresponding to the PDCCH order, whether the uplink sending timing advance included in the RAR that responds to the PRACH scheduled by using the PDCCH order is the first uplink sending timing advance or the second uplink sending timing advance.

In another example, a PDCCH (an example of first control information) for scheduling a RAR explicitly or implicitly indicates that the signaling is used for initial second uplink sending timing. For example, if the PDCCH carries a PCI of a neighboring cell, the RAR signaling scheduled by using the PDCCH carries uplink sending timing of the neighboring cell, and the uplink sending timing advance included in the TAG ID or in the scheduled RAR indicated by the PDCCH is the first uplink sending timing advance. For another example, the terminal device may determine, based on a CORESET pool corresponding to the PDCCH, whether the uplink sending timing advance included in the RAR scheduled by using the PDCCH for scheduling is the first uplink sending timing advance or the second uplink sending timing advance.

In still another example, in R16, an absolute timing advance command (absolute timing advance command) is introduced in a two-step random access process, as shown in FIG. 5. The signaling consists of two bytes, where 12 bits are used to carry an initial value of T_{A}, and the other 4 bits are set to "0". For example, one 'R' field may indicate whether the signaling indicates a first uplink sending timing advance or a second uplink sending timing advance of a local cell. For example, if the 'R' field is 0, it indicates the first uplink sending timing advance of the local cell; and if the 'R' field is 1, it indicates the second uplink sending timing advance of the local cell or the second uplink sending timing advance of a neighboring cell. For another example, two 'R' fields may alternatively indicate a TAG ID. The terminal device initializes, based on the indicated TAG ID, an uplink sending timing advance associated with the TAG ID. If the indicated TAG ID is configured for the neighboring cell, the uplink sending timing advance of the neighboring cell is initialized. For still another example, three 'R' fields may be used, where 2 bits indicate a TAG ID, and 1 bit indicates whether the uplink sending timing advance included in the signaling is the first uplink sending timing advance or the second uplink sending timing advance of the TAG.

For example, the network device may send an absolute timing advance command to the terminal device, where the absolute timing advance command includes the information indicating the uplink sending timing advance, and one field in the absolute timing advance command indicates a TAG ID. The terminal device may determine, based on the indicated TAG ID, an uplink sending timing advance associated with the TAG ID. The terminal device may determine, based on the timing advance group identifier, whether the information about the uplink sending timing advance in the absolute timing advance command indicates the first uplink sending timing advance in the at least two uplink sending timing advances or the second uplink sending timing advance in the at least two uplink sending timing advances.

For example, the network device may send an absolute timing advance command to the terminal device, where the absolute timing advance command includes the information indicating the uplink sending timing advance, and one field in the absolute timing advance command indicates a TAG ID. The terminal device determines, based on the indicated TAG ID, the uplink sending timing advance associated with the TAG ID. If the TAG ID in the absolute timing advance command is associated with the first uplink sending timing advance, the terminal device may initialize or determine the first uplink sending timing advance based on the information about the uplink sending timing advance in the absolute timing advance command. If the TAG ID in the absolute timing advance command is associated with the second uplink sending timing advance, the terminal device may initialize or determine the second uplink sending timing advance based on the information about the uplink sending timing advance. For example, two 'R' fields may indicate the TAG ID. For another example, a quantity of 'R' fields is not limited in this application. For example, more than two 'R' fields may indicate the TAG ID.

Optionally, step 305 is further included: The terminal device determines the initial value of the first uplink sending timing advance based on the received information indicating the first uplink sending timing advance.

The network device may indicate the information about the first uplink sending timing advance to the terminal device by using different methods. Correspondingly, the terminal device may determine the initial value of the first uplink sending timing advance based on different indication methods. For understanding of a specific implementation, refer to the descriptions in step 304.

Optionally, step 306 is further included: The network device sends an adjustment amount of the uplink sending timing advance to the terminal device. Correspondingly, the terminal device receives the timing adjustment amount from the network device.

As described in step 304, the network device sends the initial value of the first uplink sending timing advance to the terminal device. As described above, the network device may further update the uplink sending timing advance by using a MAC CE. Specifically, the following methods may be included:

### Method 1

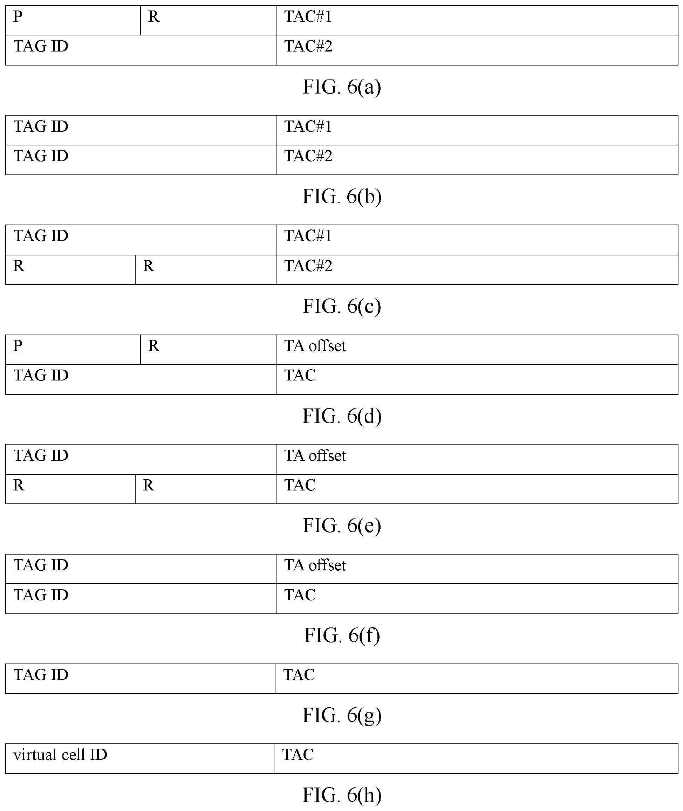

In an example, FIG. 6(a) to FIG. 6(c) show a format of a TAC command provided in this application. FIG. 6(a) is used as an example. The TAC command includes a timing advance command #1, a timing advance command #2, a P field, a reserved field R, and a TAG ID field. The timing advance command #1 is used to update the first uplink sending timing advance, that is, indicates an adjustment amount *T*_{A1} (that is, information about a first adjustment amount) of the first uplink sending timing advance. The timing advance command #2 is used to update the second uplink sending timing, that is, indicates an adjustment amount *T*_{A2} (that is, information about a second adjustment amount) of the second uplink sending timing advance. The P field indicates whether the timing advance command #2 field of the second uplink sending timing advance exists. If the P field indicates that the timing advance command #2 does not exist, the terminal device only needs to update the first uplink sending timing advance. The TAG ID field corresponds to a timing advance group identifier associated with the first uplink sending timing advance and/or a timing advance group identifier associated with the second uplink sending timing advance. In this case, the terminal device may determine, based on *T*_{A1} in the timing advance command #1, that an updated first uplink sending timing advance is: *N*_{TA1_new} = *N*_{TA1_old} + (*T*_{A1} - 31) · 16 · 64/2*^{µ}*. If the P field indicates that the timing advance command #2 exists, the terminal device may update both the first uplink sending timing advance and the second uplink sending timing advance, where *N*_{TA1_new} = *N*_{TA1_old} + (*T*_{A1} - 31) · 16 *·* 64/2*^{µ}* , and *N*_{TA2_new} = *N*_{TA2_old} + (*T*_{A2} - 31) · 16 · 64/2*^{µ}*.

It should be understood that, in this application, the adjustment amount indicated by the information about the second adjustment amount in step 304 may be the same as or different from the adjustment amount indicated by the information about the second adjustment amount in step 306. This is not limited.

FIG. 6(b) is used as an example. The TAC command includes a timing advance command #1, a timing advance command #2, and a TAG ID field. After receiving the TAC command, the terminal device may update both the first uplink sending timing advance and the second uplink sending timing advance. The two TAG ID fields respectively correspond to the timing advance group identifier associated with the first uplink sending timing advance and the timing advance group identifier associated with the second uplink sending timing advance. FIG. 6(c) is used as an example. The TAC command includes a timing advance command #1, a timing advance command #2, a reserved field R, and a TAG ID field. The TAG ID field corresponds to the timing advance group identifier associated with the first uplink sending timing advance and/or an index of the timing advance group associated with the second uplink sending timing advance. After receiving the TAC command, the terminal device may update both the first uplink sending timing advance and the second uplink sending timing advance.

In another embodiment, FIG. 6(d) to FIG. 6(f) show a format of an existing TAC command. FIG. 6(d) is used as an example. The TAC command includes a TA offset, a timing advance command, a P field, a reserved field R, and a TAG ID field. The TA offset field indicates an information offset of a first offset between the first uplink sending timing advance and the second uplink sending timing advance. The timing advance command is used to update the second uplink sending timing advance, that is, indicates an adjustment amount *T*_{A2} of the second uplink sending timing advance. The P field indicates whether the timing advance command field of the second uplink sending timing advance exists. If the P field indicates that the timing advance command field of the second uplink sending timing advance exists, the terminal device may update the second uplink sending timing advance *N*_{TA2_New} based on the timing advance command field, and determine, based on the TA offset field, that *N*_{TA1} = *N*_{TA2_New} + *offset ·* 16 · 64/2*^{µ}*. If the P field indicates that the timing advance command field of the second uplink sending timing advance does not exist, it is determined, based on the TA offset field, that *N*_{TA1} = *N*_{TA2_Old} + *offset ·* 16 · 64/2*^{µ}*. The TAG ID field corresponds to a timing advance group identifier associated with the first uplink sending timing advance and/or a timing advance group identifier associated with the second uplink sending timing advance.

FIG. 6(e) is used as an example. The TAC command includes a timing advance command field, a TA offset field, a reserved field R, and a TAG ID field. After receiving the TAC command, the terminal device may update the second uplink sending timing advance *N*_{TA2_New} based on the timing advance command field, and determine, based on the TA offset field, that *N*_{TA1} = *N*_{TA2_New} + *offset* · 16 · 64/2*^{µ}*. The TAG ID field corresponds to a timing advance group identifier associated with the first uplink sending timing advance and/or a timing advance group identifier associated with the second uplink sending timing advance. FIG. 6(f) is used as an example. The TAC command includes a timing advance command, a TA offset field, and a TAG ID field. After receiving the TAC command, the terminal device may update the second uplink sending timing advance *N*_{TA2_New} based on the timing advance command field, and determine, based on the TA offset field, that *N*_{TA1} = *N*_{TA2_New} *+ offset* · 16 · 64/2*^{µ}*. The two TAG ID fields respectively correspond to a timing advance group identifier associated with the first uplink sending timing advance and a timing advance group identifier associated with the second uplink sending timing advance.

### Method 2

In another embodiment, FIG. 6(g) shows another format of an existing TAC command. In this case, whether the TAC is used to update the first uplink sending timing advance or the second uplink sending timing advance may be determined based on a PDCCH associated with a CORESET pool that is used to schedule a PDSCH carrying the TAC command. For example, during RRC configuration, if the CORESET pool #1 is associated with the first uplink sending timing advance, and the PDCCH that schedules the T AC command is from the CORESET pool #1, the TAC is used to update the first uplink sending timing advance. For another example, whether the TAC command is used to update the first uplink sending timing advance or the second uplink sending timing advance may be determined based on a TCI state used by a PDSCH that carries the TAC command or a configured TAG ID.

### Method 3

In still another embodiment, FIG. 6(h) shows another format of a TAC command provided in this application. The MAC CE command includes a virtual cell ID field and a TAC field. The virtual cell ID field indicates an identifier of a virtual cell. A mapping relationship between a virtual cell ID and a physical cell identifier may be configured by the RRC. When a physical cell identifier associated with the virtual cell ID in the MAC CE command is a serving cell identifier (serving cell ID), the signaling is used to update the second uplink sending timing advance. When a physical cell identifier associated with the virtual cell ID in the MAC CE command is not a serving cell ID, the signaling is used to update the first uplink sending timing advance.

### Method 4

It should be understood that, in step 306, the method 1 in the method 304 may also be used. To be specific, the network device may send the adjustment amount (that is, the information about the second adjustment amount) of the second uplink sending timing advance and the information about the first offset to the terminal device. The terminal device may determine the first uplink sending timing advance *N*_{TA1} for an effective time of the first offset and an effective time of the adjustment amount of the second uplink sending timing advance. For example, in the scenario shown in (a) in FIG. 4, the terminal device determines *N*_{TA1} = *N*_{TA2_new} *+ offset* · 16 · 64/2*^{µ}* = *N*_{TA2_old} + (*T*_{A2} *+ offset -* 31) · 16 · 64/2*^{µ}*; and in the scenario shown in (b) in FIG. 4, the terminal device determines *N*_{TA1} = *N*_{TA2_old} *+ offset* · 16 · 64/2*^{µ}*. For details, refer to the descriptions in the method 1 in step 304 for understanding.

It should be understood that, in this application, the offset indicated by the information about the first offset in step 304 may be the same as or different from the offset indicated by the information about the first offset in step 306. This is not limited.

Optionally, step 307 is further included: The terminal device updates the first uplink sending timing advance based on the received adjustment amount of the network device.

The network device may indicate the adjustment amount of the uplink sending timing advance to the terminal device by using different methods, and the terminal device may determine the adjustment amount of the first uplink sending timing advance based on different indication methods. For understanding of a specific implementation, refer to the descriptions in step 306.

Step 308: The terminal device sends the data on the first uplink sending resource based on the first uplink sending timing advance.

Optionally, step 309 is further included: The network device releases the first uplink sending timing advance.

For example, the network device may send signaling to the terminal device to release an offset (or the first uplink sending timing advance). After receiving the message, the terminal device may determine all uplink sending timing advances based on an existing TA mechanism.

Based on the foregoing technical solution, in this embodiment, at least two uplink sending timing advances may be maintained between the network device and the terminal device, and the terminal may determine an uplink sending timing advance used for an uplink sending resource, thereby improving performance of data transmission between the terminal device and the network device. In other words, the network device may flexibly use a resource associated with the first uplink sending timing advance to indicate the first uplink sending timing advance, so that the first uplink sending timing advance can be distinguished from an existing uplink sending timing advance, and the first uplink sending timing advance can be updated and maintained.

This application further provides another communication method 400. A procedure of the method may also be understood with reference to FIG. 3, and is not shown again. The following mainly describes a difference between the method 400 and the method 300. The method includes:
Step 401: A network device configures, for a terminal device, a first uplink sending resource associated with a first uplink sending timing advance *N*_{TA1} in at least two uplink sending timing advances and a correspondence between the first uplink sending resource and an offset and/or α.

For understanding of "a network device configures, for a terminal device, a first uplink sending resource associated with a first uplink sending timing advance *N*_{TA1} in at least two uplink sending timing advances", refer to step 301 in the method 300.

In this embodiment, α is a TAC compensation coefficient, α∈ [-1, +1], and the offset is information about a first offset between the first uplink sending timing advance and the second uplink sending timing advance.

In a possible implementation, the network device may configure one or more parameter sets by using RRC. Each parameter set includes one α value and/or one offset, and each set corresponds to one identifier. For example, a parameter set #1 is {α1, offset1}, a parameter set #2 is {α2, offset1}, and a parameter set #3 is {α3, offset3}. For another example, a parameter set #4 is {α4}, and a parameter set #5 is {offset5}.

The network device may further configure a correspondence between a parameter set and an identifier. The identifier in this application may include, for example, a transmission configuration indicator state index, a reference signal index, a transmission configuration indicator state set index, a reference signal set index, a control resource set identifier, and a resource pool set identifier of a control resource set. For example, the correspondence may be sent to the terminal device by using RRC signaling or MAC CE signaling.

In this application, the "identifier" may also be understood as an "index" (index).

In an example, the network device may configure a correspondence between a parameter set and a transmission configuration indicator state index. For example, a transmission configuration indicator state #1 - a parameter set #1, a transmission configuration indicator state #2 - the parameter set #1, a transmission configuration indicator state #3 - a parameter set #2, a transmission configuration indicator state #4 - the parameter set #1, a transmission configuration indicator state #5 - a parameter set #3, and a transmission configuration indicator state #6 - a parameter set #4. In other words, each transmission configuration indicator state index may correspond to one parameter set, different transmission configuration indicator state indexes may correspond to a same parameter set or different parameter sets. This is not limited. For another example, the network device may configure a correspondence between a parameter set and a transmission configuration indicator state index.

In another example, the network device may configure a correspondence between a parameter set and a reference signal index. For example, a reference signal index #1 - a parameter set #3, a reference signal index #2 - a parameter set #1, a reference signal index #3 - a parameter set #2, a reference signal index #4 - the parameter set #1, a reference signal index #5 - a parameter set #3, and a reference signal index #6 - a parameter set #4.

In another possible implementation, the network device may configure at least one α set and at least one offset set by using RRC. The α set includes one or more different α values, and each α value corresponds to one α index. The offset set includes one or more different offsets, and each offset corresponds to one offset index. For example, an α set #1 is {α1, α2, α3, α4, α5}. For another example, an offset set is #1 is {offset1, offset2, offset4, offset5, offset6}.

In this implementation, the network device may also configure a correspondence between an α value in the α set and an identifier and/or a correspondence between an offset in the offset set and an identifier.

For example, a control resource set identifier #1 - {α1, offset2}, a control resource set identifier #2 - {α2, offset1}, a control resource set identifier #3 - {α1, offset3}, and a control resource set identifier #4 - {α4, offset4}.

Step 402: The terminal device determines a first uplink sending resource associated with the first uplink sending timing advance first uplink sending timing advance in the at least two uplink sending timing advances, and a correspondence between the first uplink sending resource and an offset and/or α.

Specifically, for understanding of "the terminal device determines a first uplink sending resource associated with the first uplink sending timing advance first uplink sending timing advance in the at least two uplink sending timing advances", refer to step 302 in the method 300.

The terminal device may determine the correspondence between the first uplink sending resource and an offset and/or α by using RRC signaling or MAC CE signaling.

Step 403: The network device determines an initial value of the second uplink sending timing advance.

For example, the network device may determine the second uplink sending timing advance by measuring an SRS signal sent by the terminal. For another example, the network device may trigger the terminal device to send a PRACH preamble, to determine the initial value of the second uplink sending timing advance. For another example, the network device may trigger the terminal device to report a downlink sending timing advance difference, and the network device determines the initial value of the second uplink sending timing based on the second uplink sending timing advance and the downlink sending timing difference. A specific implementation in which the network device determines the initial value of the second uplink sending timing advance is not limited in this application.

Step 404: The network device sends, to the terminal device, information indicating the second uplink sending timing advance. Correspondingly, the terminal device receives, from the network device, the information indicating the second uplink sending timing advance.

For example, the network device sends a RAR message to the terminal device, where the message includes the information about the second uplink sending advance.

Step 405: The terminal device determines an initial value of the second uplink sending timing advance and an initial value of the first uplink sending timing advance based on the received information indicating the second uplink sending timing advance.

For example, the terminal device receives a RAR sent by the network device, where the RAR includes the initial value T_{A1} of the second uplink sending timing. If a transmission configuration indicator state of the first uplink sending resource to be sent by the terminal device is associated with the first uplink sending timing, and the transmission configuration indicator state is associated with one or more of a parameter set, an offset in an offset set, an α value in an α set, and the like, the terminal device determines that the first uplink sending timing is: *N*_{TA1}=*N*_{TA2}+offset·16·64/2^{µ}=(T_{A2}+offset)·16·64/2^{µ}.

For another example, if a CORESET ID for scheduling the first uplink sending resource is associated with the first uplink sending timing, and the CORESET ID is associated with one or more of a parameter set, an offset in an offset set, an α value in an α set, and the like, the terminal device determines that the first uplink sending timing is: *N*_{TA1}=*N*_{TA2}+offset·16·64/2^{µ}=(T_{AZ}+offset)·16·64/2^{µ}.

Step 406: The network device sends an adjustment amount of the second uplink sending timing advance to the terminal device. Correspondingly, the terminal device receives the adjustment amount of the uplink sending timing advance from the network device.

For example, the network device may update the second uplink sending timing advance by using MAC CE signaling.

Step 407: The terminal device updates the first uplink sending timing advance and the second uplink sending timing adjustment amount based on the received timing adjustment amount of the network device.

For example, the terminal device receives TAC MAC CE signaling sent by the network device, where the TAC includes T_{A2} and is used to update the second uplink sending timing advance. If the transmission configuration indicator state of the uplink resource to be sent by the terminal is associated with the first uplink sending timing, and is associated with one or more of a parameter set, an offset set, and an α set, the first uplink sending timing is updated to the following: *N*_{TA1_new}=*N*_{TA2_old}+(α·T_{A2}+offset)·16·64/2^{µ}=*N*_{TA1_old}+(α·T_{A2})·16·64/2^{µ}.

Step 408: The terminal device sends the first uplink sending resource based on the first uplink sending timing advance.

Optionally, step 409 is further included: The network device releases the first uplink sending timing advance.

For example, the network device sends signaling to release the first uplink sending timing advance. After receiving the message, the terminal device may determine all uplink sending timing advances based on an existing TA mechanism.

When the network device reconfigures the association relationship between the first uplink sending timing advance and the first uplink sending resource, and/or the network device reconfigures the correspondence between an identifier and an offset and/or α, the terminal device may determine the first uplink sending timing advance based on one or more of the first uplink sending timing advance, the parameter set, an offset in the offset set, an α value in the α set, and the like.

Based on the foregoing technical solution, in this embodiment, the network device may configure the association relationship between the first uplink sending timing advance and the first uplink sending resource and the correspondence between an identifier and a parameter set, an offset, and/or an α value, so that the terminal device can determine the values of the first uplink sending timing advance and the second uplink sending timing advance based on the existing TAC signaling, thereby improving performance of data transmission between the terminal device and the network device. In other words, the network device may flexibly use a resource associated with the first uplink sending timing advance to indicate the first uplink sending timing advance, so that the first uplink sending timing advance can be distinguished from an existing uplink sending timing advance, and the first uplink sending timing advance can be updated and maintained.

It may be understood that the examples in the method 300 and the method 400 in embodiments of this application are merely intended to help a person skilled in the art understand embodiments of this application, but are not intended to limit embodiments of this application to specific scenarios in the examples. It is clear that a person skilled in the art can make various equivalent modifications or variations to the examples in the method 300 and the method 400, and such modifications or variations also fall within the scope of embodiments of this application.

It may be further understood that some optional features in embodiments of this application may be independent of other features in some scenarios, or may be combined with other features in some scenarios. This is not limited.

It may be further understood that embodiments described in this application may be independent solutions, or may be combined based on internal logic. All these solutions fall within the protection scope of this application. In addition, interpretations or descriptions of terms in embodiments may be mutually referenced or interpreted in embodiments. This is not limited.

It should be understood that "predefine" in this application can be understood as "define", "define in advance", "store", "prestore", "pre-negotiate", "preconfigure", "build into", or "pre-burn".

It may be understood that, in this application, "when", "if", and "in case of" all mean that an apparatus performs corresponding processing in an objective situation, are not intended to limit time, do not require that the apparatus should have a determining action during implementation, and do not mean that there are other limitations.

It may be understood that "and/or" in this specification describes an association relationship between associated objects, and represents that three relationships may exist. For example, A and/or B may represent the following cases: Only A exists, both A and B exist, and only B exists, where A and B may be singular or plural. In the text descriptions of this application, a character "/" indicates an "or" relationship between the associated objects. In a formula in this application, the character "/" indicates a "division" relationship between the associated objects.

The foregoing mainly describes the solutions provided in embodiments of this application from the perspective of interaction between all nodes. It may be understood that, to implement the foregoing functions, the nodes such as the terminal device and the network device include corresponding hardware structures and/or software modules for performing the functions. A person skilled in the art may be aware that, in combination with units and algorithm steps of the examples described in embodiments disclosed in this specification, this application may be implemented by using hardware or a combination of hardware and computer software. Whether a function is performed by using hardware or hardware driven by computer software depends on particular applications and design constraints of the technical solutions. A person skilled in the art may use different methods to implement the described functions for each particular application, but it should not be considered that the implementation goes beyond the scope of this application.

It may be understood that, to implement the functions in the foregoing embodiments, the network device and the terminal device include corresponding hardware structures and/or software modules for performing the functions. A person skilled in the art should be easily aware that, in combination with units and method steps of the examples described in embodiments disclosed in this application, this application may be implemented by using hardware or a combination of hardware and computer software. Whether a function is performed by using hardware or hardware driven by computer software depends on particular application scenarios and design constraints of the technical solutions.

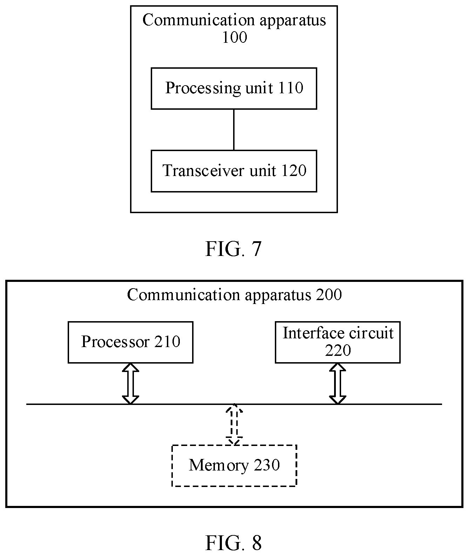

FIG. 7 and FIG. 8 are diagrams of structures of possible communication apparatuses according to embodiments of this application. The communication apparatuses may be configured to implement the functions of the terminal device and the network device in the foregoing method embodiments, and therefore can also implement the beneficial effects in the foregoing method embodiments. In embodiments of this application, the communication apparatus may be a terminal device, or may be a network device, or may be a module (for example, a chip) used in the terminal device or the network device.

As shown in FIG. 7, a communication apparatus 100 includes a processing unit 110 and a transceiver unit 120. The communication apparatus 100 is configured to implement the functions of the terminal device or the network device in the embodiment of the method 300.

When the communication apparatus 100 is configured to implement the functions of the terminal device in the embodiment of the method 300, the processing unit 110 is configured to determine a first uplink sending resource associated with a first uplink sending timing advance in at least two uplink sending timing advances; and the processing unit 110 is configured to control the transceiver unit 120 to send data on the first uplink sending resource based on the first uplink sending timing advance.

In a possible implementation, the processing unit 110 is further configured to determine the first uplink sending timing advance in the at least two uplink sending timing advances.

In a possible implementation, the transceiver unit 120 is configured to receive a first control resource set; and the processing unit 110 is configured to determine, based on the first control resource set used for scheduling, that the uplink sending resource scheduled by using the first control resource set is the first uplink sending resource.

In a possible implementation, the transceiver unit 120 is configured to receive a first control resource set; the transceiver unit 120 is further configured to receive second information; and the processing unit 110 is configured to determine, based on the first control resource set and the second information, that a resource scheduled by using the first control resource set is the first uplink sending resource.

In a possible implementation, the processing unit 110 is configured to determine a first reference signal of an uplink sending resource, and the processing unit 110 is configured to determine, based on the first reference signal, that the uplink resource is the first uplink sending resource.

In a possible implementation, the processing unit is configured to determine a first reference signal or a first transmission configuration indicator state of an uplink sending resource; the transceiver unit 120 is configured to receive third information; and the processing unit 110 is configured to determine, based on the first reference signal of the uplink sending resource and the third information, that the uplink sending resource is the first uplink sending resource; or the processing unit 110 is configured to determine, based on the first transmission configuration indicator state of the uplink sending resource and the third information, that the uplink sending resource is the first uplink sending resource.

In a possible implementation, the transceiver unit 110 is configured to receive first information, where the first information includes at least two transmission configuration indicator state fields, and a first transmission configuration indicator state field in the at least two transmission configuration indicator state f\ields indicates a transmission configuration indicator state of an uplink sending resource; and the processing unit 120 is configured to determine, based on the first transmission configuration indicator state field, that the uplink sending resource is the first uplink sending resource.

In a possible implementation, the transceiver unit 110 is configured to receive first signaling, where the first signaling is used to schedule an uplink sending resource, the first signaling includes a first field, and the first field indicates that the first uplink sending timing advance is used for the uplink sending resource; and the processing unit 120 is configured to determine, based on the first field, that the uplink sending resource is the first uplink sending resource.

In a possible implementation, the transceiver unit 110 is configured to receive information about a first offset, where the information about the first offset indicates information about an offset between the first uplink sending timing advance and a second uplink sending timing advance in the at least two uplink sending timing advances; and the processing unit 120 is configured to determine the first uplink sending timing advance in the at least two uplink sending timing advances based on the second uplink sending timing advance and the information about the first offset.

In a possible implementation, the transceiver unit 110 is configured to receive a random access response, where the random access response includes information indicating an uplink sending timing advance. The transceiver unit 110 is further configured to receive first control information, where the first control information is used to schedule the random access response, and the random access response includes the information indicating the uplink sending timing advance; and the processing unit 120 is configured to determine, based on the first control information, that the information that is included in the random access response and that indicates the uplink sending timing advance is information indicating the first uplink sending timing advance. Alternatively, the transceiver unit 110 is further configured to receive second control information, where the second control information is used to schedule a physical random access channel, the physical random access channel is used to request the random access response, and the random access response includes the information indicating the uplink sending timing advance; and the processing unit 120 is configured to determine, based on the second control information, that the information that is included in the random access response and that indicates the uplink sending timing advance is information indicating the first uplink sending timing advance.

In a possible implementation, the transceiver unit 110 is configured to receive an absolute timing advance command, where the absolute timing advance command includes information indicating an uplink sending timing advance.

In a possible implementation, the transceiver unit 110 is configured to receive second signaling from a network device, and the processing unit 120 is configured to determine the first uplink sending timing advance based on the second signaling.

In a possible implementation, the transceiver unit 110 is configured to receive third signaling from a network device, and the processing unit 120 is configured to determine the first uplink sending timing advance based on the third signaling.

In a possible implementation, the transceiver unit 110 is configured to receive information about a second adjustment amount at a first moment, where the information about the second adjustment amount indicates an adjustment amount for updating the second uplink sending timing advance; the processing unit 120 is configured to determine an updated second uplink sending timing advance *N*_{TA2_new} based on the information about the second adjustment amount; the transceiver unit 110 is configured to receive information about a first offset at a second moment, where the second moment is after a moment at which the first adjustment amount takes effect; and the processing unit 120 is configured to determine, based on the updated second uplink sending timing advance and the information about the first offset, that the first uplink sending timing advance is: *N*_{TA1} = *N*_{TA2_new} *+ offset ·* 16 · 64/2*^{µ}*, where *N*_{TA2_new} is the second uplink sending timing advance that is updated after the second adjustment amount takes effect, *offset ·* 16 · 64/2*^{µ}* represents the first offset, and *µ* represents a subcarrier spacing.

In a possible implementation, the processing unit 110 is configured to receive information about a second adjustment amount from the network device at a first moment, where the information about the second adjustment amount indicates an adjustment amount for updating the second uplink sending timing advance; the transceiver unit 110 is configured to receive information about a first offset from the network device at a third moment, where the third moment is before a moment at which the second adjustment amount takes effect; and the processing unit 120 is configured to determine, based on the second uplink sending timing advance and the information about the first offset, that the first uplink sending timing advance is: *N*_{TA1} = *N*_{TA2_old} *+ offset* · 16 · 64/2*^{µ}*, where *N*_{TA2_old} is the second uplink sending timing advance that is not updated before the second adjustment amount takes effect, *offset* · 16 · 64/2*^{µ}* represents the first offset, and *µ* represents a subcarrier spacing.

When the communication apparatus 100 is configured to implement the functions of the network device in the embodiment of the method 300, the transceiver unit 110 is configured to send first signaling, and the transceiver unit 110 is further configured to send second signaling.

In a possible implementation, the transceiver unit 110 is configured to send first information.

In a possible implementation, the transceiver unit 110 is configured to send second information.

In a possible implementation, the transceiver unit 110 is configured to send second information.

In a possible implementation, the transceiver unit 110 is configured to send first control information, or is configured to send second control information.

In a possible implementation, the transceiver unit 110 is configured to send third signaling.

In a possible implementation, the transceiver unit 110 is configured to send information about a second adjustment amount at a first moment; and the transceiver unit 110 is configured to send information about a first offset at a second moment, where the second moment is after a moment at which the second adjustment amount takes effect.

In a possible implementation, the transceiver unit 110 is configured to send information about a second adjustment amount at a first moment; and the transceiver unit 110 is configured to send information about a first offset at a third moment, where the third moment is before a moment at which the second adjustment amount takes effect.

For more detailed descriptions about the processing unit 110 and the transceiver unit 120, directly refer to the related descriptions in the embodiment of the method 300. Details are not described herein again.

When the communication apparatus 100 is configured to implement the functions of the terminal device in the embodiment of the method 400, the transceiver unit 110 is configured to receive N parameter sets; the transceiver unit 110 is configured to receive a correspondence that is between M identifiers and the N parameter sets and that is configured by the network device, where the identifier includes at least one of the following: a transmission configuration indicator state index, a reference signal index, a transmission configuration indicator state set index, a reference signal set index, a control resource set identifier, and a resource pool set identifier of a control resource set, each of the M identifiers is associated with the first uplink sending resource, and M is an integer greater than or equal to 1; and the processing unit 120 is configured to determine the first uplink sending timing advance based on the second uplink sending timing advance in the at least two uplink sending timing advances and a parameter set associated with the first uplink sending resource.

In a possible implementation, the transceiver unit 110 is configured to receive at least one first parameter set; and/or the transceiver unit 110 is configured to receive at least one second parameter set configured by the network device; the transceiver unit 110 is configured to receive a correspondence between M identifiers and K first parameters in the at least one first parameter set and/or L second parameter sets in the at least one second parameter set; and the processing unit 120 is configured to determine the first uplink sending timing advance based on the second uplink sending timing advance and a first parameter set and/or a second parameter set associated with the first uplink sending resource.

When the communication apparatus 100 is configured to implement the functions of the network device in the embodiment of the method 400, the transceiver unit 110 is configured to send N parameter sets; and the transceiver unit 110 is configured to send a correspondence between M identifiers and the N parameter sets.

In a possible implementation, the transceiver unit 110 is configured to send at least one first parameter set; the network transceiver unit 110 is configured to send at least one second parameter set; and the transceiver unit 110 is configured to send a correspondence between M identifiers and N first parameters in the first parameter set and/or L second parameters in the second parameter set.

For more detailed descriptions about the processing unit 110 and the transceiver unit 120, directly refer to the related descriptions in the embodiment of the method 400. Details are not described herein again.

As shown in FIG. 8, a communication apparatus 200 includes a processor 210 and an interface circuit 220. The processor 210 and the interface circuit 220 are coupled to each other. It may be understood that the interface circuit 220 may be a transceiver or an input/output interface. Optionally, the communication apparatus 200 may further include a memory 230, configured to store instructions executed by the processor 210, or store input data required by the processor 210 to run the instructions, or store data generated after the processor 210 runs the instructions.

When the communication apparatus 200 is configured to implement the method 300, the processor 210 is configured to implement the functions of the processing unit 110, and the interface circuit 220 is configured to implement the functions of the transceiver unit 120.

When the communication apparatus 200 is configured to implement the method 400, the processor 210 is configured to implement the functions of the processing unit 110, and the interface circuit 220 is configured to implement the functions of the transceiver unit 120.

It should be understood that the processor shown in FIG. 8 may include at least one processor, and the interface circuit may also include a plurality of interface circuits.

For interpretations and beneficial effects of the related content in any one of the apparatuses provided above, refer to the corresponding method embodiment provided above. Details are not described herein again.

When the communication apparatus is a chip used in a terminal, the terminal chip implements the functions of the terminal in the foregoing method embodiments. The terminal chip receives information from another module (for example, a radio frequency module or an antenna) in the terminal, where the information is sent by a base station to the terminal; or the terminal chip sends information to another module (for example, a radio frequency module or an antenna) in the terminal, where the information is sent by the terminal to a base station.

It may be understood that the processor in embodiments of this application may be a central processing unit (Central Processing Unit, CPU), or may be another general-purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

Based on the methods provided in embodiments of this application, this application further provides a computer program product. The computer program product stores computer program code. When the computer program code is run on a computer, the computer is enabled to perform the method performed by the terminal device or the network device in any one of the embodiments in the method 300 and the method 400.

Based on the methods provided in embodiments of this application, this application further provides a computer-readable medium. The computer-readable medium stores program code. When the program code is run on a computer, the computer is enabled to perform the method performed by the terminal device or the network device in the foregoing embodiment.

Based on the methods provided in embodiments of this application, this application further provides a communication system. The communication system includes a terminal device and a network device. The terminal device is configured to perform the steps corresponding to the terminal device in the method 300 and the method 400, and the network device is configured to perform the steps corresponding to the network device in the method 300 and the method 400.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Alternatively, the processor and the storage medium may exist in a base station or a terminal as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or a logical conflict occurs, terms and/or descriptions in different embodiments are consistent and may be referenced by each other. Technical features in different embodiments may be combined to form new embodiments based on internal logical relationships.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
determining, by a terminal device, a first uplink sending resource associated with a first uplink sending timing advance *N*_{TA1} in at least two uplink sending timing advances, wherein the at least two uplink sending timing advances comprise the first uplink sending timing advance; and
sending, by the terminal device, data on the first uplink sending resource based on the first uplink sending timing advance.

2. The method according to claim **1,** wherein the method further comprises:
determining, by the terminal device, the first uplink sending timing advance in the at least two uplink sending timing advances.

3. The method according to claim 1 or 2, wherein the determining, by a terminal device, a first uplink sending resource associated with a first uplink sending timing advance in at least two uplink sending timing advances comprises:
receiving, by the terminal device, a first control resource set, wherein the first control resource set is used to schedule an uplink sending resource, and the first control resource set is associated with the first uplink sending timing advance, or a resource pool to which the first control resource set belongs is associated with the first uplink sending timing advance; and
determining, by the terminal device, that the uplink sending resource scheduled by using the first control resource set is the first uplink sending resource.

4. The method according to claim 1 or 2, wherein the determining, by a terminal device, a first uplink sending resource associated with a first uplink sending timing advance in at least two uplink sending timing advances comprises:
determining, by the terminal device, a first reference signal of an uplink sending resource, wherein the first reference signal belongs to a first reference signal set, and the first reference signal set is associated with the first uplink sending timing advance, or the first reference signal is associated with the first uplink sending timing advance; and
determining, by the terminal device based on the first reference signal, that the uplink resource is the first uplink sending resource; or
determining, by the terminal device, a first transmission configuration indicator state of an uplink sending resource, wherein the first transmission configuration indicator state belongs to a first transmission configuration indicator state set, and the first transmission configuration indicator state set is associated with the first uplink sending timing advance, or a first transmission configuration indicator state of the first uplink sending resource is associated with the first uplink sending timing advance; and
determining, by the terminal device based on the first transmission configuration indicator state, that the uplink sending resource is the first uplink sending resource.

5. The method according to claim 1 or 2, wherein the determining, by a terminal device, a first uplink sending resource associated with a first uplink sending timing advance in at least two uplink sending timing advances comprises:
receiving, by the terminal device, first information from a network device, wherein the first information comprises at least two transmission configuration indicator state fields, and a first transmission configuration indicator state field in the at least two transmission configuration indicator state fields indicates a transmission configuration indicator state of an uplink sending resource; and
determining, by the terminal device based on the first transmission configuration indicator state field, that the uplink sending resource is the first uplink sending resource.

6. The method according to claim 1 or 2, wherein the determining, by a terminal device, a first uplink sending resource associated with a first uplink sending timing advance in at least two uplink sending timing advances comprises:
receiving, by the terminal device, first signaling from a network device, wherein the first signaling is used to schedule an uplink sending resource, the first signaling comprises a first field, and the first field indicates that the first uplink sending timing advance is used for the uplink sending resource; and
determining, by the terminal device based on the first field, that the uplink sending resource scheduled by using the first signaling is the first uplink resource.

7. The method according to any one of claims 2 to 6, wherein the determining, by the terminal device, the first uplink sending timing advance in the at least two uplink sending timing advances comprises:
receiving, by the terminal device, a first random access response from the network device, wherein the first random access response comprises information indicating an uplink sending timing advance;
receiving, by the terminal device, first control information, wherein the first control information is used to schedule the first random access response, and the first control information indicates that the information that is comprised in the first random access response and that indicates the uplink sending timing advance is information indicating the first uplink sending timing advance; and
determining, by the terminal device, the first uplink sending timing advance in the at least two uplink sending timing advances based on the first control information; or
receiving, by the terminal device, second control information, wherein the second control information is used to schedule a first physical random access channel, the first physical random access channel is used to request the first random access response, and the second information indicates that the information that is comprised in the first random access response and that indicates the uplink sending timing advance is information indicating the first uplink sending timing advance; and
determining, by the terminal device, the first uplink sending timing advance in the at least two uplink sending timing advances based on the second control information.

8. The method according to any one of claims 2 to 6, wherein the method further comprises:
receiving, by the terminal device, an absolute timing advance command from the network device, wherein the absolute timing advance command comprises information indicating an uplink sending timing advance, wherein
one field in the absolute timing advance command indicates that the information that is comprised in the absolute timing advance command and that indicates the uplink sending timing advance is information indicating the first uplink sending timing advance; or
one field in the absolute timing advance command indicates a timing advance group identifier, and the timing advance group identifier is associated with the first uplink sending timing advance; or
one field in the absolute timing advance command indicates a timing advance group identifier, and another field in the absolute timing advance command indicates that the information that is comprised in the absolute timing advance command and that indicates the uplink sending timing advance is information indicating the first uplink sending timing advance; and
the determining, by the terminal device, the first uplink sending timing advance in the at least two uplink sending timing advances comprises:
determining, by the terminal device, the first uplink sending timing advance in the at least two uplink sending timing advances based on the timing advance command.

9. The method according to any one of claims 2 to 6, wherein the at least two uplink sending timing advances comprise a second uplink sending timing advance; and the method further comprises:
receiving, by the terminal device, an absolute timing advance command, wherein the absolute timing advance command comprises information indicating an uplink sending timing advance, and one field in the absolute timing advance command indicates a timing advance group identifier; and
determining, by the terminal device based on the timing advance group identifier, that the information about the uplink sending timing advance in the absolute timing advance command indicates the first uplink sending timing advance in the at least two uplink sending timing advances; or
determining, by the terminal device based on the timing advance group identifier, that the information about the uplink sending timing advance in the absolute timing advance command indicates the second uplink sending timing advance in the at least two uplink sending timing advances.

10. The method according to any one of claims 2 to 6, wherein the method further comprises:
receiving, by the terminal device, second signaling from the network device, wherein the second signaling indicates information about the first uplink sending timing advance, the second signaling comprises a second field, the second field indicates information about a first offset, and the information about the first offset is information about an offset between the second uplink sending timing advance and the first uplink sending timing advance; and
the determining, by the terminal device, the first uplink sending timing advance in the at least two uplink sending timing advances comprises:
determining, by the terminal device, the first uplink sending timing advance in the at least two uplink sending timing advances based on the second signaling.

11. The method according to any one of claims 7 to 10, wherein the method further comprises:
receiving, by the terminal device, third signaling from the network device, wherein the third signaling indicates update information of the first uplink sending timing advance, and the third signaling comprises the second field; and the second field indicates the information about the first offset, and the information about the first offset is the information about the offset between the second uplink sending timing advance and the first uplink sending timing advance; or the second field indicates information about a first adjustment amount, and the information about the first adjustment amount is used to update an adjustment amount of the first uplink sending timing advance; and
the determining, by the terminal device, the first uplink sending timing advance in the at least two uplink sending timing advances comprises:
determining, by the terminal device, an updated first uplink sending timing advance in the at least two uplink sending timing advances based on the third signaling.

12. The method according to claim 11, wherein the third signaling further comprises a third field, the third field indicates information about a second adjustment amount, and the information about the second adjustment amount is used to update an adjustment amount of the second uplink sending timing advance.

13. The method according to claim 12, wherein the third signaling further comprises a fourth field, and the fourth field indicates whether the third signaling comprises the third field, or the fourth field indicates a timing advance group identifier associated with the second uplink sending timing advance.

14. The method according to any one of claims 10 to 13, wherein the second signaling and/or the third signaling further comprise/comprises a fifth field; and the fifth field indicates an identifier of a virtual cell, wherein a physical cell associated with the virtual cell is a non-serving cell; or the fifth field indicates a timing advance group identifier associated with the first uplink sending timing advance.

15. The method according to any one of claims 10 to 14, wherein the method further comprises:
receiving, by the terminal device, the information about the second adjustment amount from the network device at a first moment, wherein the information about the second adjustment amount indicates the adjustment amount for updating the second uplink sending timing advance;
determining, by the terminal device, an updated second uplink sending timing advance *N*_{TA2_new} based on the information about the second adjustment amount;
receiving, by the terminal device, the information about the first offset from the network device at a second moment, wherein the second moment is after a moment at which the second adjustment amount takes effect; and
determining, by the terminal device based on the updated second uplink sending timing advance and the information about the first offset, that the first uplink sending timing advance is: *N*_{TA1} = *N*_{TA2_new} *+ offset ·* 16 *·* 64/2*^{µ}*, wherein *N*_{TA2_new} is the second uplink sending timing advance that is updated after the second adjustment amount takes effect, *offset ·* 16 · 64/2*^{µ}* represents the first offset, and *µ* represents a subcarrier spacing.

16. The method according to any one of claims 10 to 14, wherein the method further comprises:
receiving, by the terminal device, the information about the second adjustment amount from the network device at a first moment, wherein the information about the second adjustment amount indicates the adjustment amount for updating the second uplink sending timing advance;
receiving, by the terminal device, the information about the first offset from the network device at a third moment, wherein the third moment is before a moment at which the second adjustment amount takes effect; and
determining, by the terminal device based on the second uplink sending timing advance and the information about the first offset, that the first uplink sending timing advance is: *N*_{TA1} = *N*_{TA2_old} *+ offset ·* 16 *·* 64/2*^{µ}*, wherein *N*_{TA2_old} is the second uplink sending timing advance that is not updated before the second adjustment amount takes effect, *offset ·* 16 · 64/2*^{µ}* represents the first offset, and *µ* represents a subcarrier spacing.

17. A communication method, comprising:
sending, by a network device, first signaling to a terminal device, wherein the first signaling is used to configure an association relationship between a first uplink sending timing advance *N*_{TA1} in at least two uplink sending timing advances and a first uplink sending resource; and
sending, by the network device, second signaling to the terminal device, wherein the second signaling indicates information about the first uplink sending timing advance, and data on the first uplink sending resource is sent by using the first uplink sending timing advance.

18. The method according to claim 17, wherein
the first signaling is used to configure an association relationship between a first control resource set for scheduling the first uplink sending resource and the first uplink sending timing advance, or the first signaling is used to configure an association relationship between a resource pool to which the first control resource set for scheduling the first uplink sending resource belongs and the first uplink sending timing advance.

19. The method according to claim 17, wherein
the first signaling is used to configure an association relationship between a first reference signal set of the first uplink sending resource and the first uplink sending timing advance, or the first signaling is used to configure an association relationship between a first reference signal of the first uplink sending resource and the first uplink sending timing advance; or
the first signaling is used to configure an association relationship between a first transmission configuration indicator state set of the first uplink sending resource and the first uplink sending timing advance, or the first signaling is used to configure an association relationship between a first transmission configuration indicator state of the first uplink sending resource and the first uplink sending timing advance.

20. The method according to claim 17, wherein the first signaling is used to configure an association relationship between a first transmission configuration indicator state indication field and the first uplink sending timing; and the method further comprises:
sending, by the network device, first information to the terminal device, wherein the first information comprises at least two transmission configuration indicator state fields, and a first transmission configuration indicator state field in the at least two transmission configuration indicator state fields indicates a transmission configuration indicator state of an uplink sending resource.

21. The method according to claim 17, wherein the first signaling is used to schedule an uplink sending resource, the first signaling comprises a first field, and the first field indicates that the first uplink sending timing advance is used for the uplink sending resource.

22. The method according to any one of claims 17 to 21, wherein the second signaling is a first random access response, and the first random access response comprises information indicating an uplink sending timing advance; and the method further comprises:
sending, by the network device, first control information to the terminal device, wherein the first control information is used to schedule the second signaling, and the first control information indicates that the information that is comprised in the second signaling and that indicates the uplink sending timing advance is information indicating the first uplink sending timing advance; or
sending, by the network device, second control information to the terminal device, wherein the second control information is used to schedule a first physical random access channel, the first physical random access channel is request information of the second signaling, and the second control information indicates that the information that is comprised in the second signaling and that indicates the uplink sending timing advance is information indicating the first uplink sending timing advance.

23. The method according to any one of claims 17 to 22, wherein the second signaling is an absolute timing advance command, and the second signaling comprises the information indicating the uplink sending timing advance; and
the sending, by the network device, second signaling to the terminal device, wherein the second signaling indicates information about the first uplink sending timing advance comprises:
one field in the second signaling indicates that the information that is comprised in the second signaling and that indicates the uplink sending timing advance is the information indicating the first uplink sending timing advance; or
one field in the second signaling indicates a timing advance group identifier, and the timing advance group identifier is associated with the first uplink sending timing advance; or
one field in the second signaling indicates a timing advance group identifier, and another field in the second signaling indicates that the information that is comprised in the second signaling and that indicates the uplink sending timing advance is the information indicating the first uplink sending timing advance.

24. The method according to any one of claims 17 to 22, wherein the at least two uplink sending timing advances comprise a second uplink sending timing advance; and the method further comprises:
sending, by the network device, an absolute timing advance command to the terminal device, wherein the absolute timing advance command comprises the information indicating the uplink sending timing advance, and one field in the absolute timing advance command indicates a timing advance group identifier, wherein
the timing advance group identifier is used by the terminal device to determine that the information about the uplink sending timing advance in the absolute timing advance command indicates the first uplink sending timing advance in the at least two uplink sending timing advances; or
the timing advance group identifier is used by the terminal device to determine that the information about the uplink sending timing advance in the absolute timing advance command indicates the second uplink sending timing advance in the at least two uplink sending timing advances.

25. The method according to any one of claims 17 to 22, wherein the second signaling comprises a second field, the second field indicates information about a first offset, and the information about the first offset is information about an offset between the second uplink sending timing advance and the first uplink sending timing advance.

26. The method according to any one of claims 23 to 25, wherein the method further comprises:
sending, by the network device, third signaling to the terminal device, wherein the third signaling indicates update information of the first uplink sending timing advance, and the third signaling comprises the second field; and the second field indicates the information about the first offset, and the information about the first offset is the information about the offset between the second uplink sending timing advance and the first uplink sending timing advance; or the second field indicates information about a first adjustment amount, and the information about the first adjustment amount is used to update an adjustment amount of the first uplink sending timing advance, wherein the first uplink sending resource is sent by using an updated first uplink sending timing advance.

27. The method according to claim 26, wherein the third signaling further comprises a third field, the third field indicates information about a second adjustment amount, and the information about the second adjustment amount is used to update an adjustment amount of the second uplink sending timing advance.

28. The method according to claim 27, wherein the third signaling further comprises a fourth field, and the fourth field indicates whether the third signaling comprises the third field, or the fourth field indicates a timing advance group identifier associated with the second uplink sending timing advance.

29. The method according to any one of claims 23 to 28, wherein the second signaling and/or the third signaling further comprise/comprises a fifth field; and the fifth field indicates an identifier of a virtual cell, wherein a physical cell associated with the virtual cell is a non-serving cell; or the fifth field indicates a timing advance group identifier associated with the first uplink sending timing advance.

30. The method according to any one of claims 25 to 29, wherein the method further comprises:
sending, by the network device, the information about the second adjustment amount to the terminal device at a first moment, wherein the information about the second adjustment amount indicates the adjustment amount for updating the second uplink sending timing advance, and the information about the second adjustment amount is used by the terminal device to determine an updated second uplink sending timing advance *N*_{TA2_new}; and
sending, by the network device, the information about the first offset to the terminal device at a second moment, wherein the second moment is after a moment at which the second adjustment amount takes effect, wherein
the second uplink sending timing advance and the information about the first offset are used by the terminal device to determine that the first uplink sending timing advance is: *N*_{TA1} = *N*_{TA2_new} *+ offset ·* 16 *·* 64/2*^{µ}*, wherein *N*_{TA2_new} is the second uplink sending timing advance that is updated after the second adjustment amount takes effect, *offset* · 16 · 64/2*^{µ}* represents the first offset, and *µ* represents a subcarrier spacing.

31. The method according to any one of claims 25 to 29, wherein the method further comprises:
sending, by the network device, the information about the second adjustment amount to the terminal device at a first moment, wherein the information about the second adjustment amount indicates the adjustment amount for updating the second uplink sending timing advance; and
sending, by the network device, the information about the first offset to the terminal device at a third moment, wherein the third moment is before a moment at which the second adjustment amount takes effect, wherein
the second uplink sending timing advance and the information about the first offset are used by the terminal device to determine that the first uplink sending timing advance is: *N*_{TA1} = *N*_{TA2_old} *+ offset ·* 16 · 64/2*^{µ}*, wherein *N*_{TA2_old} is the second uplink sending timing advance that is not updated before the second adjustment amount takes effect, *offset ·* 16 · 64/2*^{µ}* represents the first offset, and *µ* represents a subcarrier spacing.

32. A communication apparatus, comprising a transceiver unit and a processing unit, wherein
the processing unit is configured to determine a first uplink sending resource associated with a first uplink sending timing advance *N*_{TA1} in at least two uplink sending timing advances, wherein the at least two uplink sending timing advances comprise the first uplink sending timing advance; and
the transceiver unit is configured to send data on the first uplink sending resource based on the first uplink sending timing advance.

33. The apparatus according to claim 32, wherein
the processing unit is configured to determine the first uplink sending timing advance in the at least two uplink sending timing advances.

34. The apparatus according to claim 32 or 33, wherein that the processing unit is configured to determine a first uplink sending resource associated with a first uplink sending timing advance in at least two uplink sending timing advances comprises:
the transceiver unit is configured to receive a first control resource set, wherein the first control resource set is used to schedule an uplink sending resource, and the first control resource set is associated with the first uplink sending timing advance, or a resource pool to which the first control resource set belongs is associated with the first uplink sending timing advance; and
the processing unit is configured to determine that the uplink sending resource scheduled by using the first control resource set is the first uplink sending resource.

35. The apparatus according to claim 32 or 33, wherein that the processing unit is configured to determine a first uplink sending resource associated with a first uplink sending timing advance in at least two uplink sending timing advances comprises:
the processing unit is configured to determine a first reference signal of an uplink sending resource, wherein the first reference signal belongs to a first reference signal set, and the first reference signal set is associated with the first uplink sending timing advance, or the first reference signal is associated with the first uplink sending timing advance; and
the processing unit is configured to determine, based on the first reference signal, that the uplink resource is the first uplink sending resource; or
the processing unit is configured to determine a first transmission configuration indicator state of an uplink sending resource, wherein the first transmission configuration indicator state belongs to a first transmission configuration indicator state set, and the first transmission configuration indicator state set is associated with the first uplink sending timing advance, or a first transmission configuration indicator state of the first uplink sending resource is associated with the first uplink sending timing advance; and
the processing unit is configured to determine, based on the first transmission configuration indicator state, that the uplink sending resource is the first uplink sending resource.

36. The apparatus according to claim 32 or 33, wherein that the processing unit is configured to determine a first uplink sending resource associated with a first uplink sending timing advance in at least two uplink sending timing advances comprises:
the transceiver unit is configured to receive first information from a network device, wherein the first information comprises at least two transmission configuration indicator state fields, and a first transmission configuration indicator state field in the at least two transmission configuration indicator state fields indicates a transmission configuration indicator state of an uplink sending resource; and
the processing unit is configured to determine, based on the first transmission configuration indicator state field, that the uplink sending resource is the first uplink sending resource.

37. The apparatus according to claim 32 or 33, wherein that the processing unit is configured to determine a first uplink sending resource associated with a first uplink sending timing advance in at least two uplink sending timing advances comprises:
the transceiver unit is configured to receive first signaling from a network device, wherein the first signaling is used to schedule an uplink sending resource, the first signaling comprises a first field, and the first field indicates that the first uplink sending timing advance is used for the uplink sending resource; and
the processing unit is configured to determine, based on the first field, that the uplink sending resource scheduled by using the first signaling is the first uplink resource.

38. The apparatus according to any one of claims 33 to 37, wherein that the processing unit is configured to determine the first uplink sending timing advance in the at least two uplink sending timing advances comprises:
the transceiver unit is configured to receive a first random access response from the network device, wherein the first random access response comprises information indicating an uplink sending timing advance;
the transceiver unit is configured to receive first control information, wherein the first control information is used to schedule the first random access response, and the first control information indicates that the information that is comprised in the first random access response and that indicates the uplink sending timing advance is information indicating the first uplink sending timing advance; and
the processing unit is configured to determine the first uplink sending timing advance in the at least two uplink sending timing advances based on the first control information; or
the receiving unit is configured to receive second control information, wherein the second control information is used to schedule a first physical random access channel, the first physical random access channel is used to request the first random access response, and the second information indicates that the information that is comprised in the first random access response and that indicates the uplink sending timing advance is information indicating the first uplink sending timing advance; and
the processing unit is configured to determine the first uplink sending timing advance in the at least two uplink sending timing advances based on the second control information.

39. The apparatus according to any one of claims 33 to 37, wherein
the transceiver unit is configured to receive an absolute timing advance command from the network device, wherein the absolute timing advance command comprises information indicating an uplink sending timing advance, wherein
one field in the absolute timing advance command indicates that the information that is comprised in the absolute timing advance command and that indicates the uplink sending timing advance is information indicating the first uplink sending timing advance; or
one field in the absolute timing advance command indicates a timing advance group identifier, and the timing advance group identifier is associated with the first uplink sending timing advance; or
one field in the absolute timing advance command indicates a timing advance group identifier, and another field in the absolute timing advance command indicates that the information that is comprised in the absolute timing advance command and that indicates the uplink sending timing advance is information indicating the first uplink sending timing advance; and
that the processing unit is configured to determine the first uplink sending timing advance in the at least two uplink sending timing advances comprises:
the processing unit is configured to determine the first uplink sending timing advance in the at least two uplink sending timing advances based on the timing advance command.

40. The apparatus according to any one of claims 33 to 37, wherein the at least two uplink sending timing advances comprise a second uplink sending timing advance;
the transceiver unit is configured to receive an absolute timing advance command, wherein the absolute timing advance command comprises information indicating an uplink sending timing advance, and one field in the absolute timing advance command indicates a timing advance group identifier; and
the processing unit is configured to determine, based on the timing advance group identifier, that the information about the uplink sending timing advance in the absolute timing advance command indicates the first uplink sending timing advance in the at least two uplink sending timing advances; or
the processing unit is configured to determine, based on the timing advance group identifier, that the information about the uplink sending timing advance in the absolute timing advance command indicates the second uplink sending timing advance in the at least two uplink sending timing advances.

41. The apparatus according to any one of claims 33 to 37, wherein
the transceiver unit is configured to receive second signaling from the network device, wherein the second signaling indicates information about the first uplink sending timing advance, the second signaling comprises a second field, the second field indicates information about a first offset, and the information about the first offset is information about an offset between the second uplink sending timing advance and the first uplink sending timing advance; and
that the processing unit is configured to determine the first uplink sending timing advance in the at least two uplink sending timing advances comprises:
the processing unit is configured to determine the first uplink sending timing advance in the at least two uplink sending timing advances based on the second signaling.

42. The apparatus according to any one of claims 34 to 37, wherein
the transceiver unit is configured to receive third signaling from the network device, wherein the third signaling indicates update information of the first uplink sending timing advance, and the third signaling comprises a second field; and the second field indicates information about a first offset, and the information about the first offset is information about an offset between the second uplink sending timing advance and the first uplink sending timing advance; or the second field indicates information about a first adjustment amount, and the information about the first adjustment amount is used to update an adjustment amount of the first uplink sending timing advance; and
that the processing unit is configured to determine the first uplink sending timing advance in the at least two uplink sending timing advances comprises:
the processing unit is configured to determine an updated first uplink sending timing advance in the at least two uplink sending timing advances based on the third signaling.

43. The apparatus according to claim 42, wherein the third signaling further comprises a third field, the third field indicates information about a second adjustment amount, and the information about the second adjustment amount is used to update an adjustment amount of the second uplink sending timing advance.

44. The apparatus according to claim 43, wherein the third signaling further comprises a fourth field, and the fourth field indicates whether the third signaling comprises the third field, or the fourth field indicates a timing advance group identifier associated with the second uplink sending timing advance.

45. The apparatus according to any one of claims 41 to 44, wherein the second signaling and/or the third signaling further comprise/comprises a fifth field; and the fifth field indicates an identifier of a virtual cell, wherein a physical cell associated with the virtual cell is a non-serving cell; or the fifth field indicates a timing advance group identifier associated with the first uplink sending timing advance.

46. The apparatus according to any one of claims 41 to 45, wherein
the transceiver unit is configured to receive the information about the second adjustment amount from the network device at a first moment, wherein the information about the second adjustment amount indicates the adjustment amount for updating the second uplink sending timing advance;
the processing unit is configured to determine an updated second uplink sending timing advance *N*_{TA2_new} based on the information about the second adjustment amount;
the transceiver unit is configured to receive the information about the first offset from the network device at a second moment, wherein the second moment is after a moment at which the second adjustment amount takes effect; and
the transceiver unit is configured to determine, based on the updated second uplink sending timing advance and the information about the first offset, that the first uplink sending timing advance is: *N*_{TA1} = *N*_{TA2_new} + *offset ·* 16 · 64/2*^{µ}* , wherein *N*_{TA2_new} is the second uplink sending timing advance that is updated after the second adjustment amount takes effect, *offset* · 16 *·* 64/2*^{µ}* represents the first offset, and *µ* represents a subcarrier spacing.

47. The apparatus according to any one of claims 41 to 45, wherein
the transceiver unit is configured to receive the information about the second adjustment amount from the network device at a first moment, wherein the information about the second adjustment amount indicates the adjustment amount for updating the second uplink sending timing advance;
the transceiver unit is configured to receive the information about the first offset from the network device at a third moment, wherein the third moment is before a moment at which the second adjustment amount takes effect; and
the processing unit is configured to determine, based on the second uplink sending timing advance and the information about the first offset, that the first uplink sending timing advance is: *N*_{TA1} = *N*_{TA2_old} *+ offset ·* 16 *·* 64/2*^{µ}*, wherein *N*_{TA2_old} is the second uplink sending timing advance that is not updated before the second adjustment amount takes effect, *offset* · 16 *·* 64/2*^{µ}* represents the first offset, and *µ* represents a subcarrier spacing.

48. A communication apparatus, comprising a transceiver unit, wherein
the transceiver unit is configured to send first signaling to a terminal device, wherein the first signaling is used to configure an association relationship between a first uplink sending timing advance *N*_{TA1} in at least two uplink sending timing advances and a first uplink sending resource; and
the transceiver unit is configured to send second signaling to the terminal device, wherein the second signaling indicates information about the first uplink sending timing advance, and data on the first uplink sending resource is sent by using the first uplink sending timing advance.

49. The apparatus according to claim 48, wherein
the first signaling is used to configure an association relationship between a first control resource set for scheduling the first uplink sending resource and the first uplink sending timing advance, or the first signaling is used to configure an association relationship between a resource pool to which the first control resource set for scheduling the first uplink sending resource belongs and the first uplink sending timing advance.

50. The apparatus according to claim 48, wherein
the first signaling is used to configure an association relationship between a first reference signal set of the first uplink sending resource and the first uplink sending timing advance, or the first signaling is used to configure an association relationship between a first reference signal of the first uplink sending resource and the first uplink sending timing advance; or
the first signaling is used to configure an association relationship between a first transmission configuration indicator state set of the first uplink sending resource and the first uplink sending timing advance, or the first signaling is used to configure an association relationship between a first transmission configuration indicator state of the first uplink sending resource and the first uplink sending timing advance.

51. The apparatus according to claim 48, wherein the first signaling is used to configure an association relationship between a first transmission configuration indicator state indication field and the first uplink sending timing; and
the transceiver unit is configured to send first information to the terminal device, wherein the first information comprises at least two transmission configuration indicator state fields, and a first transmission configuration indicator state field in the at least two transmission configuration indicator state fields indicates a transmission configuration indicator state of an uplink sending resource.

52. The apparatus according to claim 48, wherein the first signaling is used to schedule an uplink sending resource, the first signaling comprises a first field, and the first field indicates that the first uplink sending timing advance is used for the uplink sending resource.

53. The apparatus according to any one of claims 48 to 52, wherein the second signaling is a first random access response, and the first random access response comprises information indicating an uplink sending timing advance; and
the transceiver unit is configured to send first control information to the terminal device, wherein the first control information is used to schedule the second signaling, and the first control information indicates that the information that is comprised in the second signaling and that indicates the uplink sending timing advance is information indicating the first uplink sending timing advance; or
the transceiver unit is configured to send second control information to the terminal device, wherein the second control information is used to schedule a first physical random access channel, the first physical random access channel is request information of the second signaling, and the second control information indicates that the information that is comprised in the second signaling and that indicates the uplink sending timing advance is information indicating the first uplink sending timing advance.

54. The apparatus according to any one of claims 48 to 53, wherein the second signaling is an absolute timing advance command, and the second signaling comprises the information indicating the uplink sending timing advance; and
the transceiver unit is configured to send the second signaling to the terminal device, and that the second signaling indicates the first uplink sending timing advance comprises:
one field in the second signaling indicates that the information that is comprised in the second signaling and that indicates the uplink sending timing advance is the information indicating the first uplink sending timing advance; or
one field in the second signaling indicates a timing advance group identifier, and the timing advance group identifier is associated with the first uplink sending timing advance; or
one field in the second signaling indicates a timing advance group identifier, and another field in the second signaling indicates that the information that is comprised in the second signaling and that indicates the uplink sending timing advance is the information indicating the first uplink sending timing advance.

55. The apparatus according to any one of claims 48 to 53, wherein the at least two uplink sending timing advances comprise a second uplink sending timing advance; and
the transceiver unit is configured to send an absolute timing advance command to the terminal device, wherein the absolute timing advance command comprises the information indicating the uplink sending timing advance, and one field in the absolute timing advance command indicates a timing advance group identifier, wherein
the timing advance group identifier is used by the terminal device to determine that the information about the uplink sending timing advance in the absolute timing advance command indicates the first uplink sending timing advance in the at least two uplink sending timing advances; or
the timing advance group identifier is used by the terminal device to determine that the information about the uplink sending timing advance in the absolute timing advance command indicates the second uplink sending timing advance in the at least two uplink sending timing advances.

56. The apparatus according to any one of claims 48 to 53, wherein the second signaling comprises a second field, the second field indicates information about a first offset, and the information about the first offset is information about an offset between the second uplink sending timing advance and the first uplink sending timing advance.

57. The apparatus according to any one of claims 54 to 56, wherein
the transceiver unit is configured to send third signaling to the terminal device, wherein the third signaling indicates update information of the first uplink sending timing advance, and the third signaling comprises the second field; and the second field indicates the information about the first offset, and the information about the first offset is the information about the offset between the second uplink sending timing advance and the first uplink sending timing advance; or the second field indicates information about a first adjustment amount, and the information about the first adjustment amount is used to update an adjustment amount of the first uplink sending timing advance, wherein the first uplink sending resource is sent by using an updated first uplink sending timing advance.

58. The apparatus according to claim 57, wherein the third signaling further comprises a third field, the third field indicates information about a second adjustment amount, and the information about the second adjustment amount is used to update an adjustment amount of the second uplink sending timing advance.

59. The apparatus according to claim 58, wherein the third signaling further comprises a fourth field, and the fourth field indicates whether the third signaling comprises the third field, or the fourth field indicates a timing advance group identifier associated with the second uplink sending timing advance.

60. The apparatus according to any one of claims 54 to 59, wherein the second signaling and/or the third signaling further comprise/comprises a fifth field; and the fifth field indicates an identifier of a virtual cell, wherein a physical cell associated with the virtual cell is a non-serving cell; or the fifth field indicates a timing advance group identifier associated with the first uplink sending timing advance.

61. The apparatus according to any one of claims 56 to 60, wherein
the transceiver unit is configured to send the information about the second adjustment amount to the terminal device at a first moment, wherein the information about the second adjustment amount indicates the adjustment amount for updating the second uplink sending timing advance, and the information about the second adjustment amount is used by the terminal device to determine an updated second uplink sending timing advance *N*_{TA2_new}; and
the transceiver unit is configured to send the information about the first offset to the terminal device at a second moment, wherein the second moment is after a moment at which the second adjustment amount takes effect, wherein
the second uplink sending timing advance and the information about the first offset are used by the terminal device to determine that the first uplink sending timing advance is: *N*_{TA1} = *N*_{TA2_new} *+ offset ·* 16 · 64/2*^{µ}*, wherein *N*_{TA2_new} is the second uplink sending timing advance that is updated after the second adjustment amount takes effect, *offset* · 16 · 64/2*^{µ}* represents the first offset, and *µ* represents a subcarrier spacing.

62. The apparatus according to any one of claims 56 to 61, wherein
the transceiver unit is configured to send the information about the second adjustment amount to the terminal device at a first moment, wherein the information about the second adjustment amount indicates the adjustment amount for updating the second uplink sending timing advance; and
the transceiver unit is configured to send the information about the first offset to the terminal device at a third moment, wherein the third moment is before a moment at which the second adjustment amount takes effect, wherein
the second uplink sending timing advance and the information about the first offset are used by the terminal device to determine that the first uplink sending timing advance is: *N*_{TA1} = *N*_{TA2_old} *+ offset ·* 16 · 64/2*^{µ}*, wherein *N*_{TA2_old} is the second uplink sending timing advance that is not updated before the second adjustment amount takes effect, *offset ·* 16 · 64/2*^{µ}* represents the first offset, and *µ* represents a subcarrier spacing.

63. A computer-readable storage medium, wherein the storage medium stores instructions, and when the instructions are executed by a communication apparatus, the method according to any one of claims 1 to 16 is implemented, or the method according to any one of claims 17 to 31 is implemented.

64. A computer program product, wherein when the computer program product runs on a computer, the computer is enabled to perform the method according to any one of claims 1 to 16, or the computer is enabled to perform the method according to any one of claims 17 to 31.

65. A chip system, comprising a processor, wherein the processor is configured to invoke a computer program from a memory and run the computer program, so that a device in which the chip system is installed performs the method according to any one of claims 1 to 16, and a computer performs the method according to any one of claims 17 to 31.
